# EUROPEAN PATENT APPLICATION

(11) **EP 4 773 421 A1**
(43) Date of publication of application: **08.07.2026**
(21) Application number: 23950797.3
(22) Date of filing: 31.08.2023
(51) Int. Cl.: H01M 50/557, B29C 65/06, H01M 50/15, H01M 50/176, H01M 50/184, H01M 50/562, H01M 50/564

(54) **BATTERY**

(71) Applicant: Vehicle Energy Japan Inc., Hitachinaka-shi, Ibaraki 312-8505 (JP)
(72) Inventor: NAKANE Kiyokazu, Hitachinaka-shi, Ibaraki 312-8505 (JP); ISHIGE Hideaki, Hitachinaka-shi, Ibaraki 312-8505 (JP)
(74) Representative: MERH-IP Matias Erny Reichl Hoffmann Patentanwälte PartG mbB
(86) International application number: PCT/JP2023/031902
(87) International publication number: WO 2025/046854

(57) **Abstract**

To obtain a battery that uses an electrode terminal formed by friction pressure welding while maintaining or improving sealing properties.

A battery 1 includes: a charging/discharging body 100; an exterior body (lid 420) that houses the charging/discharging body and has a through-hole (negative electrode side insertion hole 420b) formed therein; a sealing body (negative electrode side gasket 630) that is provided in the exterior body; and an electrode terminal (negative electrode terminal 320) that is provided in the sealing body. The electrode terminal includes: a first portion (insertion portion 322) that is inserted into the through-hole of the exterior body and is indirectly or directly joined to the charging/discharging body; and a second portion (main body portion 321) that is exposed to the outside of the exterior body, is lower in rigidity than the first portion, and is joined to a bus bar or an electric device. The first portion and the second portion are joined to each other by friction pressure welding. The second portion includes a projecting portion (raised portion 320e or cut molded portion 320f) projecting toward the sealing body while annularly surrounding an outer circumferential surface 322b of the first portion at a joint part with the first portion. The projecting portion is in contact with the sealing body.

## Description

### Technical Field

The present invention relates to a battery.

### Background Art

Electrode terminals and the like formed by friction pressure welding of members of different materials is known from the past (see Patent Documents 1 to 6).

### Prior Art Document

### Patent Documents

Patent Document 1: JP-1991-295260-A
Patent Document 2: JP-1999-176268-A
Patent Document 3: JP-1992-143085-A
Patent Document 4: JP-1994-47570-A
Patent Document 5: JP-1994-292984-A
Patent Document 6: JP-2022-49727-A

### Summary of the Invention

### Problem to be Solved by the Invention

There is a demand for a battery that uses an electrode terminal formed by friction pressure welding of members of different materials while maintaining or improving sealing properties between an exterior body and the electrode terminal by a sealing body.

### Means for Solving the Problem

A first battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that is exposed to an outside of the exterior body, is lower in rigidity than the first portion, and is joined to a bus bar or an electric device. The first portion and the second portion are joined to each other by friction pressure welding. The second portion includes a projecting portion projecting toward the sealing body along an outer circumferential surface of the first portion at a joint part with the first portion. The projecting portion is in contact with the sealing body.

A second battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that is exposed to an outside of the exterior body, is lower in rigidity than the first portion, and is joined to a bus bar or an electric device. The first portion and the second portion are joined to each other by friction pressure welding. The second portion includes a plane portion having been subjected to a cutting process at a part adjacent to a joint part with the first portion.

A third battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that is exposed to an outside of the exterior body, is lower in rigidity than the first portion, and is joined to a bus bar or an electric device. The first portion and the second portion are joined to each other by friction pressure welding. The first portion includes: a first shaft portion that is joined to the second portion; and a second shaft portion that is continued to the first shaft portion and has a shape smaller in size along a direction intersecting a lamination direction with the first shaft portion than that of the first shaft portion.

A fourth battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that is exposed to an outside of the exterior body, is lower in rigidity than the first portion, and is joined to a bus bar or an electric device. The first portion and the second portion are joined to each other by friction pressure welding. The second portion is in contact with the sealing body along a lamination direction with the first portion at a part exposed to the outside of the exterior body, and is not in contact with the sealing body along a direction intersecting the lamination direction.

A fifth battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that includes a protruding portion partially protruding toward the first portion, is exposed to an outside of the exterior body, is lower in rigidity than the first portion, and is joined to a bus bar or an electric device. The first portion and the protruding portion are joined to each other by friction pressure welding. The protruding portion includes a projecting portion projecting toward the sealing body in a direction intersecting a lamination direction of the first portion and the second portion. A surface area of the first portion is larger than a surface area of the protruding portion excluding the projecting portion at a joint part between the first portion and the protruding portion.

A sixth battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that includes a protruding portion partially protruding toward the first portion, is exposed to an outside of the exterior body, is lower in rigidity than the first portion, and is joined to a bus bar or an electric device. The first portion and the protruding portion are joined to each other by friction pressure welding. The protruding portion includes a projecting portion projecting toward the sealing body in a direction intersecting a lamination direction of the first portion and the second portion. The projecting portion is in contact with the sealing body.

A seventh battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that includes a protruding portion partially protruding toward the first portion, is exposed to an outside of the exterior body, is lower in rigidity than the first portion, and is joined to a bus bar or an electric device. The first portion and the protruding portion are joined to each other by friction pressure welding. The protruding portion includes a projecting portion projecting toward the sealing body in a direction intersecting a lamination direction of the first portion and the second portion. The sealing body includes a concave-shaped recessed portion at a part facing the projecting portion. The projecting portion is inserted into the recessed portion.

An eighth battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that includes a protruding portion partially protruding toward the first portion, is exposed to an outside of the exterior body, is lower in rigidity than the first portion, and is joined to a bus bar or an electric device. The first portion and the protruding portion are joined to each other by friction pressure welding. The protruding portion includes a cut molded portion having been subjected to a cutting process along a lamination direction of the protruding portion and the first portion at a part adjacent to a joint part with the first portion. The cut molded portion faces the sealing body in a direction intersecting the lamination direction.

A ninth battery of the present invention includes: a charging/discharging body; an exterior body that houses the charging/discharging body and has a through-hole formed therein; a sealing body that is provided in the exterior body; and an electrode terminal that is provided in the sealing body. The electrode terminal includes: a first portion that is inserted into the through-hole of the exterior body and is indirectly or directly joined to the charging/discharging body; and a second portion that is exposed to an outside of the exterior body, is lower in rigidity than the first portion, and is joined to a bus bar or an electric device. The first portion and the second portion are joined to each other by friction pressure welding. The second portion includes a projecting portion projecting toward the sealing body along an outer circumferential surface of the first portion at a joint part with the first portion. The projecting portion is in contact with the sealing body.

### Advantages of the Invention

According to the present invention, it is possible to obtain a battery that uses an electrode terminal formed by friction pressure welding of members of different materials while maintaining or improving sealing properties between an exterior body and the electrode terminal by a sealing body.

### Brief Description of the Drawings

FIG. 1 is a perspective view for depicting a battery 1 of a first embodiment.
FIG. 2 is a side view for depicting, in cross section, constitutional members around a positive electrode terminal 310 of the battery 1 in a region 2A-2B of FIG. 1.
FIG. 3 is a side view for depicting, in cross section, constitutional members around a negative electrode terminal 320 of the battery 1 in a region 3A-3B of FIG. 1.
FIG. 4 is a perspective view for depicting the battery 1 by being partially decomposed.
FIG. 5 is a perspective view for depicting a charging/discharging body 100 of FIG. 4.
FIG. 6 is a side view for depicting, in cross section, a part of the charging/discharging body 100 in a region 6A-6B of FIG. 5.
FIG. 7 is a perspective view for depicting constitutional members around the positive electrode terminal 310 of the battery 1 of FIG. 1 by being decomposed.
FIG. 8 is a perspective view for depicting constitutional members around a cleavage valve 430 and a sealing plug 440 of the battery 1 of FIG. 1 by being decomposed.
FIG. 9 is a perspective view for depicting constitutional members around the negative electrode terminal 320 of the battery 1 of FIG. 1 by being decomposed.
FIG. 10 is a side view for depicting, in cross section, a state in which a first portion 320P and a second portion 320Q of the negative electrode terminal 320 are separated from each other in a manufacturing method for the negative electrode terminal 320 of the battery 1 in FIG. 1.
FIG. 11 is a side view for depicting, in cross section, a state in which the first portion 320P and the second portion 320Q of the negative electrode terminal 320 are brought into contact with each other, following FIG. 10.
FIG. 12 is a side view for depicting, in cross section, a state in which the first portion 320P and the second portion 320Q of the negative electrode terminal 320 are subjected to friction pressure welding and a recessed portion 320d and a raised portion 320e are generated, following FIG. 11.
FIG. 13 is a side view for depicting, in cross section, a state in which the raised portion 320e of the negative electrode terminal 320 is subjected to a cutting process to form a cut molded portion 320f, following FIG. 12.
FIG. 14 is a side view for depicting, in cross section, a state in which a triangular cut molded portion 330f is formed in a negative electrode terminal 330 of a modified example 1 of the first embodiment.
FIG. 15 is a side view for depicting, in cross section, a state in which a relatively long rectangular cut molded portion 340f is formed along the longitudinal direction X and the lateral direction Y in a negative electrode terminal 340 of a modified example 2 of the first embodiment.
FIG. 16 is a side view for depicting, in cross section, a state in which a relatively long rectangular cut molded portion 350f is formed along the height direction Z in a negative electrode terminal 350 of a modified example 3 of the first embodiment.
FIG. 17 is a side view for depicting, in cross section, a state in which a raised portion is removed and a plane portion 360r is formed without forming a cut molded portion in a negative electrode terminal 360 of a modified example 4 of the first embodiment.
FIG. 18 is a side view for depicting, in cross section, a state of a negative electrode terminal 370 of a modified example 5 of the first embodiment before friction pressure welding.
FIG. 19 is a side view for depicting, in cross section, a state of the negative electrode terminal 370 of the modified example 5 of the first embodiment after friction pressure welding.
FIG. 20 is a side view for depicting, in cross section, constitutional members around a negative electrode terminal 380 of a battery 2 of a second embodiment.
FIG. 21 is a side view for depicting, in cross section, a state in which a central axis S2 of a first portion 380P and a central axis S1 of a second portion 320Q of the negative electrode terminal 380 are allowed to relatively match each other, and the first portion 380P and the second portion 320Q are brought into contact with each other, in a manufacturing method for the negative electrode terminal 380 of the battery 2 of FIG. 20.
FIG. 22 is a bottom view for depicting the negative electrode terminal 380 of FIG. 21 in a state without the cross-sectional view.
FIG. 23 is a side view for depicting, in cross section, a state in which the first portion 380P and the second portion 320Q of the negative electrode terminal 380 are subjected to friction pressure welding, and then the central axis S2 of the first portion 380P and the central axis S1 of the second portion 320Q do not relatively match each other, following FIG. 21 and FIG. 22.
FIG. 24 is a bottom view for depicting the negative electrode terminal 380 of FIG. 23 in a state without the cross-sectional view.
FIG. 25 is a side view for depicting, in cross section, a state in which an outer circumferential surface 380b of the first portion 380P of the negative electrode terminal 380 is subjected to a cutting process, and the central axis S2 of the first portion 380P and the central axis S1 of the second portion 320Q are allowed to relatively match each other, following FIG. 23 and FIG. 24.
FIG. 26 is a bottom view for depicting the negative electrode terminal 380 of FIG. 25 in a state without the cross-sectional view.
FIG. 27 is a side view for depicting, in cross section, constitutional members around a negative electrode terminal 390 of a battery 3 of a modified example 1 of the second embodiment.
FIG. 28 is a side view for depicting, in cross section, a state in which a central axis S2 of a first portion 320P and a central axis S1 of a second portion 320Q of the negative electrode terminal 300 are allowed to relatively match each other, and the first portion 320P and the second portion 320Q are brought into contact with each other in a manufacturing method for the negative electrode terminal 390 of the battery 3 of FIG. 27.
FIG. 29 is a bottom view for depicting the negative electrode terminal 390 of FIG. 28 in a state without the cross-sectional view.
FIG. 30 is a side view for depicting, in cross section, a state in which the first portion 320P and the second portion 320Q of the negative electrode terminal 390 are subjected to friction pressure welding, and then the central axis S2 of the first portion 320P and the central axis S1 of the second portion 320Q do not relatively match each other, following FIG. 28 and FIG. 29.
FIG. 31 is a bottom view for depicting the negative electrode terminal 390 of FIG. 30 in a state without the cross-sectional view.
FIG. 32 is a side view for depicting, in cross section, constitutional members around a negative electrode terminal 710 of a battery 4 of a third embodiment.
FIG. 33 is a side view for depicting, in cross section, a state in which a first portion 710P and a second portion 710Q of the negative electrode terminal 710 are brought into contact with each other in a manufacturing method for the negative electrode terminal 710 of FIG. 32.
FIG. 34 is a side view for depicting, in cross section, a state in which the first portion 710P and the second portion 710Q of the negative electrode terminal 710 are subjected to friction pressure welding and a raised portion 710e is generated, following FIG. 33.
FIG. 35 is a side view for depicting, in cross section, constitutional members around a negative electrode terminal 720 of a battery 5 of a modified example 1 of the third embodiment.
FIG. 36 is a side view for depicting, in cross section, constitutional members around a negative electrode terminal 720 of a battery 6 of a modified example 2 of the third embodiment.
FIG. 37 is a side view for depicting, in cross section, constitutional members around a negative electrode terminal 730 of a battery 7 of a modified example 3 of the third embodiment.
FIG. 38 is a side view for depicting, in cross section, constitutional members around a negative electrode terminal 810 of a battery 8 of a fourth embodiment.
FIG. 39 is a side view for depicting, in cross section, a state in which a first portion 710P and a second portion 810Q of the negative electrode terminal 810 are brought into contact with each other in a manufacturing method for the negative electrode terminal 810 of FIG. 38.
FIG. 40 is a side view for depicting, in cross section, a state in which the first portion 710P and the second portion 810Q of the negative electrode terminal 810 are subjected to friction pressure welding and a raised portion 810e is generated, following FIG. 39.
FIG. 41 is a side view for depicting, in cross section, constitutional members around a negative electrode terminal 810 of a battery 9 of a modified example 1 of the fourth embodiment.
FIG. 42 is a side view for depicting, in cross section, constitutional members around a negative electrode terminal 820 of a battery 10 of a modified example 2 of the fourth embodiment.
FIG. 43 is a side view for depicting, in cross section, constitutional members around a negative electrode terminal 910 of a battery 11 of a fifth embodiment.
FIG. 44 is a side view for depicting, in cross section, constitutional members around a positive electrode terminal 1010 of a battery 12 of a sixth embodiment.

### Modes for Carrying Out the Invention

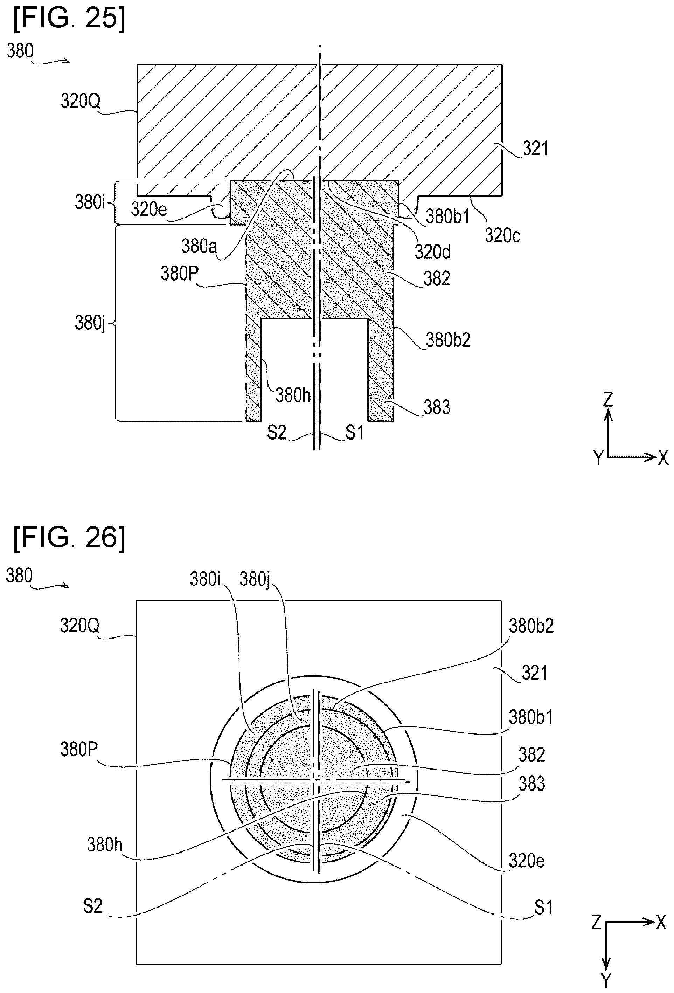

Embodiments for carrying out the present invention will be described with reference to the drawings. In order to facilitate understanding of each of the embodiments, the sizes and ratios of constitutional members are exaggerated in each of the drawings in some cases. For example, in a negative electrode terminal 380 depicted in FIG. 25 and FIG. 26, the relative positional displacement between a central axis S2 of a first portion 380P and a central axis S1 of a second portion 320Q is exaggerated and illustrated. In each of the drawings, the same reference numerals are assigned to the same configurations. In each of the drawings, the longitudinal direction X, the lateral direction Y, and the height direction Z of a battery 1 are depicted by arrows. In each of the drawings, the longitudinal direction X, the lateral direction Y, and the height direction Z of the battery 1 depict relative positional relations in the same drawing. That is, where the battery 1 is rotated by 180 degrees such that an upper surface and a lower surface are inverted and arranged, or where the battery 1 is rotated by 90 degrees such that the upper surface is arranged as a side surface, the longitudinal direction X, the lateral direction Y, and the height direction Z of the battery 1 are changed.

In each of the embodiments and a modified example of each of the embodiments, the same reference numerals are added to configurations similar to those previously described, and redundant descriptions are omitted. The configurations similar to those previously described include configurations substantially the same as those previously described, in addition to the configurations same as those previously described.

### (Battery 1 of first embodiment)

### (Configuration of battery 1)

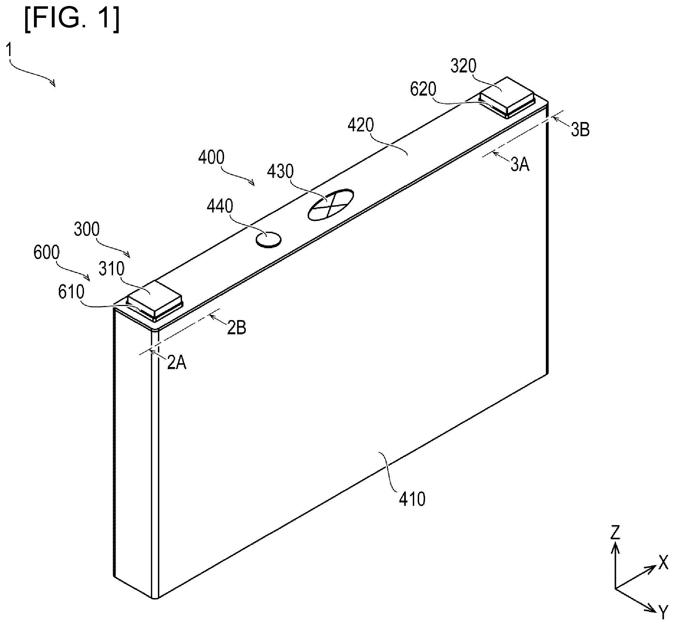

A battery 1 of a first embodiment corresponds to a specific example of the first battery described in the means for solving the problem. A configuration of the battery 1 will be described with reference to FIG. 1 to FIG. 9.

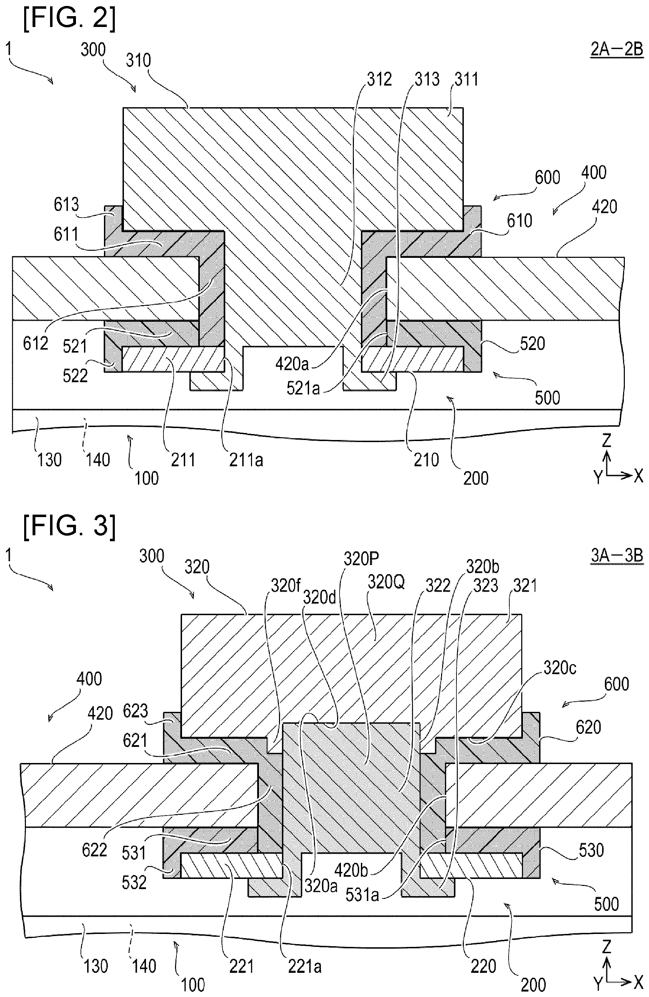

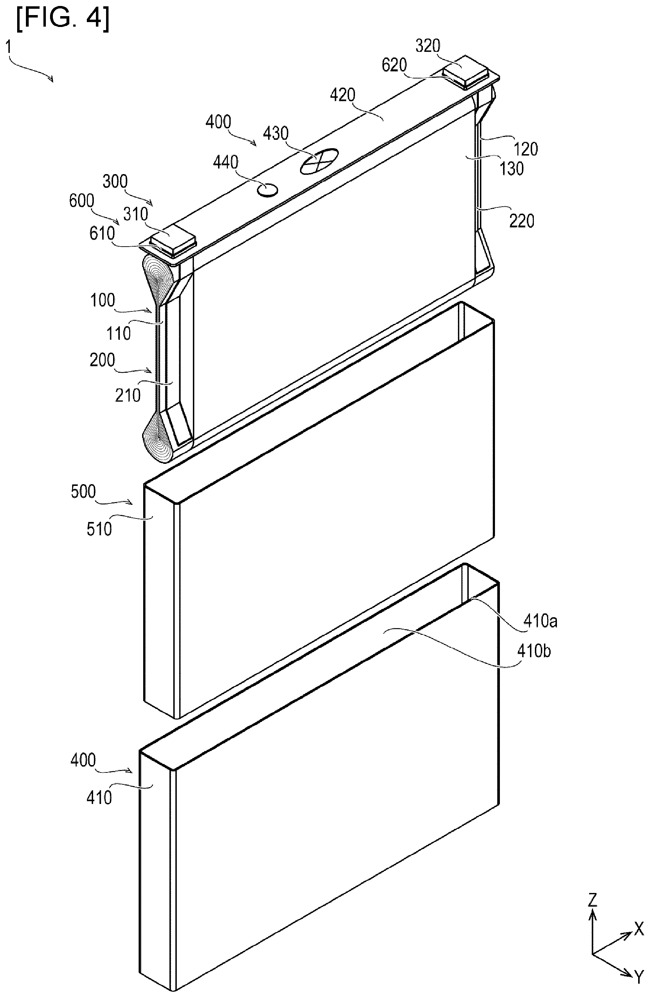

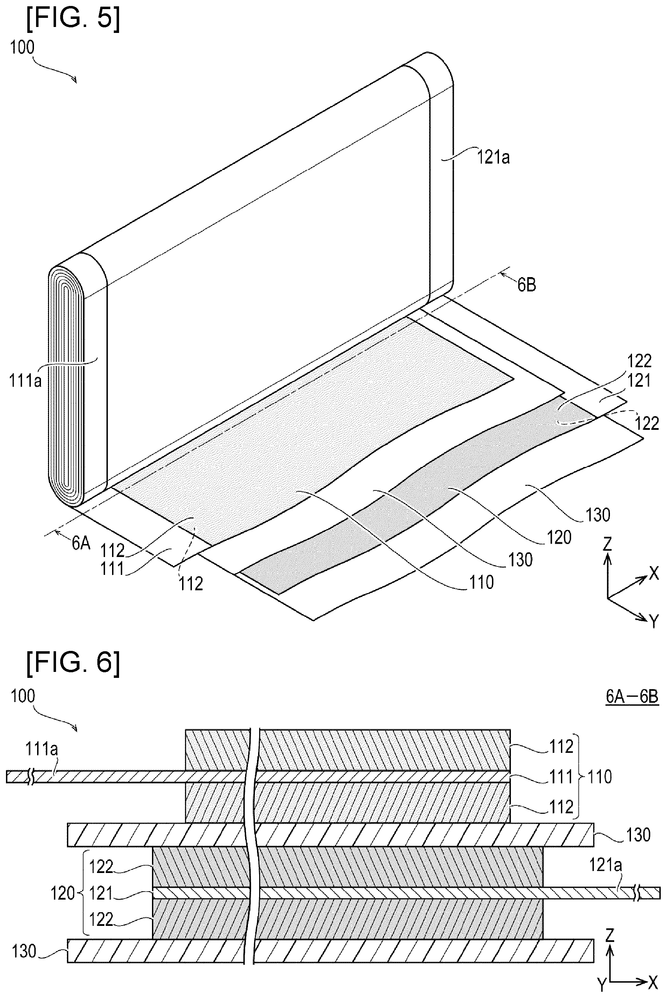

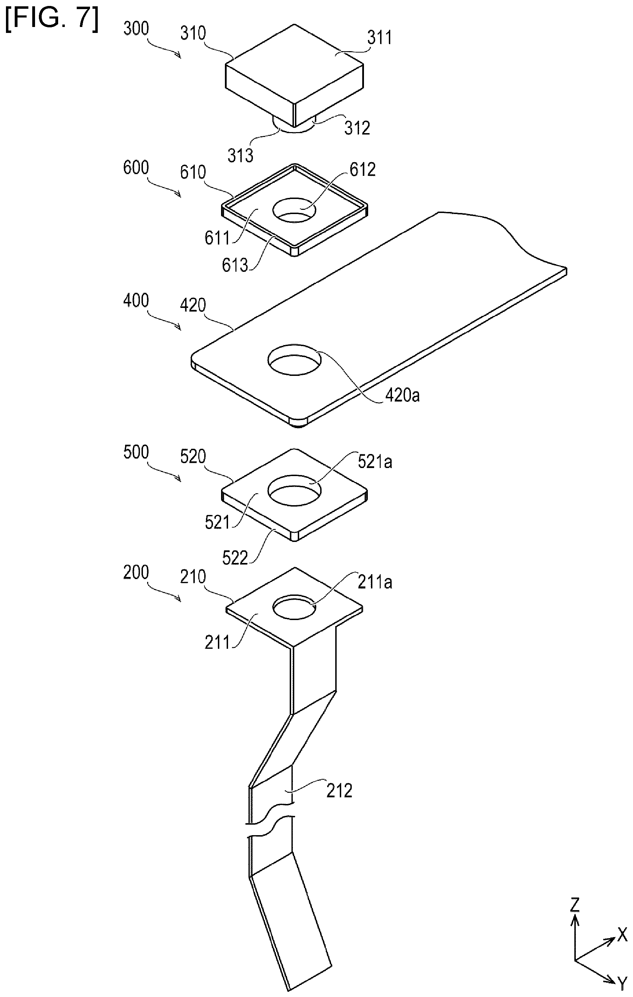

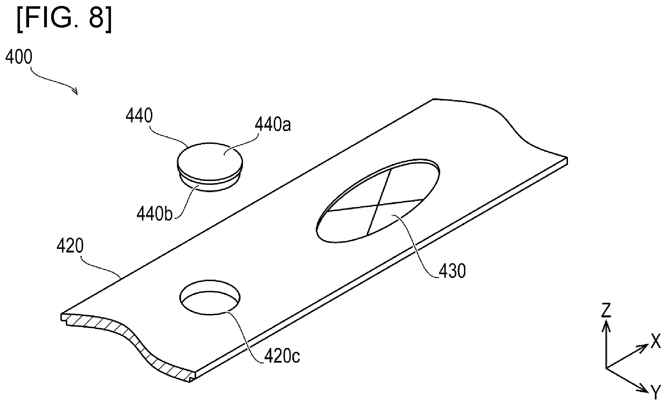

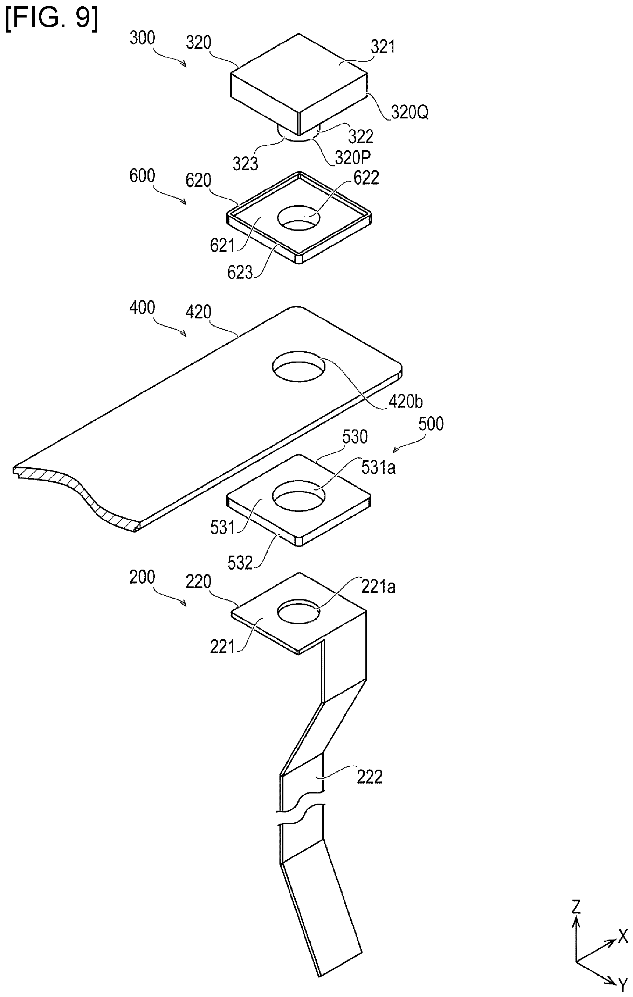

FIG. 1 is a perspective view for depicting the battery 1 of the first embodiment. FIG. 2 is a side view for depicting, in cross section, constitutional members around a positive electrode terminal 310 of the battery 1 in a region 2A-2B of FIG. 1. FIG. 3 is a side view for depicting, in cross section, constitutional members around a negative electrode terminal 320 of the battery 1 in a region 3A-3B of FIG. 1. FIG. 4 is a perspective view for depicting the battery 1 by being partially decomposed. FIG. 5 is a perspective view for depicting a charging/discharging body 100 of FIG. 4. FIG. 6 is a side view for depicting, in cross section, a part of the charging/discharging body 100 in a region 6A-6B of FIG. 5. FIG. 7 is a perspective view for depicting constitutional members around the positive electrode terminal 310 of the battery 1 of FIG. 1 by being decomposed. FIG. 8 is a perspective view for depicting constitutional members around a cleavage valve 430 and a sealing plug 440 of the battery 1 of FIG. 1 by being decomposed. FIG. 9 is a perspective view for depicting constitutional members around the negative electrode terminal 320 of the battery 1 of FIG. 1 by being decomposed.

The battery 1 includes a charging/discharging body 100 for charging and discharging electricity, a current collector 200 connected to the charging/discharging body 100, and an electrode terminal 300 connected to the current collector 200. In addition, the battery 1 includes an exterior body 400 in which constitutional members of the battery 1 are housed or to which constitutional members of the battery 1 are attached, an insulator 500 for insulating the constitutional members of the battery 1 and the exterior body 400 from each other, and a sealing body 600 for sealing the constitutional members of the battery 1 and the exterior body 400.

The charging/discharging body 100 charges and discharges electricity. The charging/discharging body 100 depicted in FIG. 2 to FIG. 6 includes a positive electrode 110, a negative electrode 120, a separator 130, and an electrolyte 140. The charging/discharging body 100 is configured such that a constitutional member obtained by laminating the positive electrode 110, the separator 130, the negative electrode 120, and the separator 130 in this order is wound in a rectangular shape. The charging/discharging body 100 may be configured by winding or by laminating.

The positive electrode 110 includes an elongated positive electrode current collecting layer 111 and a positive electrode active material layer 112 joined to both surfaces of the positive electrode current collecting layer 111. The positive electrode 110 is wound together with the negative electrode 120 and the separator 130, and is configured in a rectangular shape having end portions curved in a protruding shape as depicted in FIG. 5. One side portion 111a of the positive electrode current collecting layer 111 is not covered with the separator 130 and is exposed to the outside. The positive electrode active material layer 112 is not joined to the side portion 111a. The central part of the side portion 111a is compressed in the lateral direction Y of the battery 1 in a bundled state as depicted in FIG. 4. The side portion 111a is joined to a positive electrode current collecting plate 210. The positive electrode active material layer 112 is joined to a part excluding the side portion 111a of the positive electrode current collecting layer 111. The positive electrode active material layer 112 is joined to both surfaces of the positive electrode current collecting layer 111. The positive electrode 110 may be configured such that the positive electrode active material layer 112 is joined to only one surface of the positive electrode current collecting layer 111. The positive electrode current collecting layer 111 is formed of, for example, aluminum or an aluminum alloy. The positive electrode active material layer 112 contains a positive electrode active material composed of a lithium-containing composite oxide, a binder, a conductive assistant, and the like. For the lithium-containing composite oxide, for example, metallic elements such as nickel (Ni), cobalt (Co), and manganese (Mn), and lithium (Li) are used.

The negative electrode 120 includes an elongated negative electrode current collecting layer 121 and a negative electrode active material layer 122 joined to both surfaces of the negative electrode current collecting layer 121. The negative electrode 120 is wound together with the positive electrode 110 and the separator 130, and is configured in a rectangular shape having end portions curved in a protruding shape as depicted in FIG. 5. One side portion 121a of the negative electrode current collecting layer 121 is not covered with the separator 130 and is exposed to the outside. The negative electrode active material layer 112 is not joined to the side portion 121a. The central part of the side portion 121a is compressed in the lateral direction Y of the battery 1 in a bundled state as depicted in FIG. 4. The side portion 121a of the negative electrode current collecting layer 121 is opposite to the side portion 111a of the positive electrode current collecting layer 111 along the longitudinal direction X of the battery 1 as depicted in FIG. 5. The side portion 121a is joined to a negative electrode current collecting plate 220. The negative electrode active material layer 122 is joined to a part excluding the side portion 121a of the negative electrode current collecting layer 121. The negative electrode active material layer 122 is joined to both surfaces of the negative electrode current collecting layer 121. The negative electrode 120 may be configured such that the negative electrode active material layer 122 is joined to only one surface of the negative electrode current collecting layer 121. The negative electrode current collecting layer 121 is formed of, for example, copper or a copper alloy. The negative electrode active material layer 122 contains a negative electrode active material composed of a carbon-based material, a binder, a conductive assistant, and the like. For example, graphite is used for the carbon-based material.

The separator 130 allows lithium ions to pass while insulating between the positive electrode 110 and the negative electrode 120. The separator 130 is formed in an elongated shape. The separator 130 is configured using a porous material. Polyethylene (PE) or polypropylene (PP) is used for the separator 130. An insulating member may be used instead of the separator 130. The insulating member may be provided on the side of the positive electrode 110 facing the negative electrode 120. The insulating member may be provided on the side of the negative electrode 120 facing the positive electrode 110. A heat-resistant material may be used for the insulating member. In the case of such a configuration, the separator 130 is not essential.

The electrolyte 140 allows lithium ions to circulate between the positive electrode 110 and the negative electrode 120. The electrolyte 140 is also referred to as an electrolytic solution. The electrolyte 140 contains a solvent and a solute. The electrolyte 140 may contain additives. The solvent contains, for example, an organic solvent. For example, a carbonic ester such as ethylene carbonate is used for the organic solvent. The solute contains, for example, a lithium salt. For example, lithium hexafluorophosphate (LiPF₆) is used for the lithium salt.

The current collector 200 is connected to the charging/discharging body 100. The current collector 200 is also referred to as a current collecting plate. The current collector 200 depicted in FIG. 2 to FIG. 4, FIG. 7, and FIG. 9 includes the positive electrode current collecting plate 210 and the negative electrode current collecting plate 220.

The positive electrode current collecting plate 210 makes the positive electrode 110 and the positive electrode terminal 310 electrically conductive as depicted in FIG. 4. The positive electrode current collecting plate 210 includes a base portion 211 and a current collecting portion 212 as depicted in FIG. 7. The base portion 211 is joined to a joint portion 313 of the positive electrode terminal 310 as depicted in FIG. 2. The base portion 211 is joined to the joint portion 313, for example, by the joint portion 313 being caulked. The base portion 211 is formed in a plate shape as depicted in FIG. 7. An insertion hole 211a that penetrates in a circular shape is formed in the base portion 211. The joint portion 313 of the positive electrode terminal 310 is inserted into the insertion hole 211a of the base portion 211 as depicted in FIG. 2. The current collecting portion 212 is joined to the side portion 111a of the positive electrode 110 by, for example, ultrasonic joining or laser welding. The current collecting portion 212 is formed, in a manner being bent, downward in the height direction Z from an outer edge of the base portion 211 as depicted in FIG. 7. The current collecting portion 212 extends orthogonally to the base portion 211. The current collecting portion 212 is formed integrally with the base portion 211. The current collecting portion 212 is refracted toward the lateral direction Y along the outer shape of the side portion 111a of the positive electrode 110. The positive electrode current collecting plate 210 is formed of, for example, aluminum or an aluminum alloy.

The negative electrode current collecting plate 220 makes the negative electrode 120 and the negative electrode terminal 320 electrically conductive as depicted in FIG. 4. The outer shape of the negative electrode current collecting plate 220 is symmetrical to the outer shape of the positive electrode current collecting plate 210 along the longitudinal direction X. The negative electrode current collecting plate 220 includes a base portion 221 and a current collecting portion 222 as depicted in FIG. 9. The base portion 221 is joined to a joint portion 323 of the negative electrode terminal 320 as depicted in FIG. 3. The base portion 221 is joined to the joint portion 323, for example, by the joint portion 323 being caulked. The base portion 221 is formed in a plate shape as depicted in FIG. 9. An insertion hole 221a that penetrates in a circular shape is formed in the base portion 221. The joint portion 323 of the negative electrode terminal 320 is inserted into the insertion hole 221a of the base portion 221 as depicted in FIG. 3. The current collecting portion 222 is joined to the side portion 121a of the negative electrode 120 by, for example, ultrasonic joining or laser welding. The current collecting portion 222 is formed, in a manner being bent, downward in the height direction Z from an outer edge of the base portion 221 as depicted in FIG. 9. The current collecting portion 222 extends orthogonally to the base portion 221. The current collecting portion 222 is formed integrally with the base portion 221. The current collecting portion 222 is refracted toward the lateral direction Y along the outer shape of the side portion 121a of the negative electrode 120. The negative electrode current collecting plate 220 is formed of, for example, copper or a copper alloy.

The electrode terminal 300 is connected to the current collector 200. The electrode terminal 300 depicted in FIG. 1 to FIG. 4, FIG. 7, and FIG. 9 includes the positive electrode terminal 310 and the negative electrode terminal 320.

The positive electrode terminal 310 is connected to the positive electrode current collecting plate 210 as depicted in FIG. 4. The positive electrode terminal 310 includes a main body portion 311, an insertion portion 312, and the joint portion 313 as depicted in FIG. 2 and FIG. 7. The main body portion 311, the insertion portion 312, and the joint portion 313 are integrally formed.

The main body portion 311 is formed in a rectangular shape as depicted in FIG. 7. The main body portion 311 is provided at a base portion 611 of a positive electrode side gasket 610 as depicted in FIG. 2.

The insertion portion 312 is formed in a columnar shape as depicted in FIG. 7. The insertion portion 312 is continued to the main body portion 311. The insertion portion 312 extends from the main body portion 311 downward in FIG. 2 and FIG. 7. The insertion portion 312 is inserted into a cylindrical portion 612 of the positive electrode side gasket 610 as depicted in FIG. 2. The insertion portion 312 faces the base portion 611 and the cylindrical portion 612 of the positive electrode side gasket 610 along the longitudinal direction X and the lateral direction Y as depicted in FIG. 2.

The joint portion 313 is formed in a cylindrical shape as depicted in FIG. 2. The joint portion 313 is continued to the insertion portion 312. The joint portion 313 extends from the outer circumferential portion of the insertion portion 312 downward in FIG. 2 and FIG. 7. The joint portion 313 faces the insertion hole 211a of the base portion 211 of the positive electrode current collecting plate 210 along the longitudinal direction X and the lateral direction Y as depicted in FIG. 2. The tip end of the joint portion 313 protrudes downward from the insertion hole 211a of the base portion 211 of the positive electrode current collecting plate 210 as depicted in FIG. 2. The tip end of the joint portion 313 is pushed and widened outward in the radial direction and is caulked to the bottom surface of the base portion 211 as depicted in FIG. 2. The tip end of the joint portion 313 is welded to the base portion 211.

The boundary between the joint portion 313 and the insertion portion 312 in the height direction Z is not limited to the configuration depicted in FIG. 2. A part of the joint portion 313 may be configured to face the cylindrical portion 612 of the positive electrode side gasket 610 along the longitudinal direction X and the lateral direction Y. A part of the insertion portion 312 may be configured to face the insertion hole 211a of the base portion 211 of the positive electrode current collecting plate 210 along the longitudinal direction X and the lateral direction Y.

The positive electrode terminal 310 is formed of, for example, aluminum or an aluminum alloy.

### (Configuration of negative electrode terminal 320 (electrode terminal))

The negative electrode terminal 320 corresponds to an electrode terminal. The negative electrode terminal 320 is connected to the negative electrode current collecting plate 220 as depicted in FIG. 4. The negative electrode terminal 320 is provided at a negative electrode side gasket 620 as depicted in FIG. 3. The negative electrode terminal 320 includes a main body portion 321, an insertion portion 322, and the joint portion 323 as depicted in FIG. 3 and FIG. 9.

In the negative electrode terminal 320, the main body portion 321 corresponds to a second portion 320Q. The insertion portion 322 and the joint portion 323 correspond to a first portion 320P. The main body portion 321 is formed separately from the insertion portion 322 and the joint portion 323. The insertion portion 322 and the joint portion 323 are integrally formed.

In the negative electrode terminal 320, the first portion 320P and the second portion 320Q are joined by friction pressure welding. That is, the insertion portion 322 and the main body portion 321 are joined by friction pressure welding. As depicted in FIG. 3, an upper surface 320a and a part of an outer circumferential surface 320b of the insertion portion 322 are inserted into a lower surface 320c of the main body portion 321 by friction pressure welding between the insertion portion 322 and the main body portion 321, and a recessed portion 320d is formed in the main body portion 321. That is, a part of the insertion portion 322 intrudes into the main body portion 321 by friction pressure welding between the insertion portion 322 and the main body portion 321, and the recessed portion 320d is formed. As depicted in FIG. 3, due to the friction pressure welding between the insertion portion 322 and the main body portion 321, a cut molded portion 320f (projecting portion) is formed in the main body portion 321 so as to annularly surround the outer circumferential surface 320b of the insertion portion 322. As will be described later, due to the friction pressure welding between the insertion portion 322 and the main body portion 321, a raised portion 320e raised so as to annularly surround the outer circumferential surface 320b of the insertion portion 322 is scraped out in the main body portion 321, and the cut molded portion 320f is formed.

The main body portion 321 is formed in a rectangular shape as depicted in FIG. 9. The main body portion 321 is provided at a base portion 621 of the negative electrode side gasket 620 as depicted in FIG. 3. The main body portion 321 is exposed to the outside of a lid 420 as depicted in FIG. 3. The outside of the lid 420 corresponds to the outside of the battery 1. The main body portion 321 is joined to a bus bar or an electric device. The bus bar is a bus bar for electrically connecting the batteries 1 to each other. The electric device is a terminal, an end bus bar, or the like for electrically connecting the battery 1 to an external device. The external device is, for example, a device provided in an electric vehicle. The main body portion 321 includes the cut molded portion 320f projecting toward the negative electrode side gasket 620 at a joint part with the insertion portion 322 as depicted in FIG. 3. The joint part between the main body portion 321 and the insertion portion 322 is a part where the recessed portion 320d of the main body portion 321 is in contact with the upper surface 320a of the insertion portion 322. The cut molded portion 320f annularly surrounds the outer circumferential surface 320b of the insertion portion 322 along the height direction Z. The cut molded portion 320f is in contact with the negative electrode side gasket 620. The cut molded portion 320f compresses the cylindrical portion 622 of the negative electrode side gasket 620 downward in the height direction Z depicted in FIG. 3.

The insertion portion 322 is formed in a columnar shape as depicted in FIG. 9. The insertion portion 322 is joined to the main body portion 321 by friction pressure welding. The insertion portion 322 extends from the main body portion 321 downward in FIG. 3 and FIG. 9. The insertion portion 322 is inserted into a negative electrode side insertion hole 420b of the lid 420 as depicted in FIG. 3. The insertion portion 322 is inserted into the cylindrical portion 622 of the negative electrode side gasket 620. The insertion portion 322 faces the base portion 621 and the cylindrical portion 622 of the negative electrode side gasket 620 along the longitudinal direction X and the lateral direction Y.

The joint portion 323 is formed in a cylindrical shape as depicted in FIG. 3. The joint portion 323 is continued to the insertion portion 322. The joint portion 323 extends from the outer circumferential portion of the insertion portion 322 downward in FIG. 3 and FIG. 9. As depicted in FIG. 3, the joint portion 323 is inserted into the negative electrode side insertion hole 420b of the lid 420. The joint portion 323 faces the insertion hole 221a of the base portion 221 of the negative electrode current collecting plate 220 along the longitudinal direction X and the lateral direction Y. The tip end of the joint portion 323 protrudes downward from the insertion hole 221a of the base portion 221 of the negative electrode current collecting plate 220 as depicted in FIG. 3. The tip end of the joint portion 323 is pushed and widened outward in the radial direction and is caulked to the bottom surface of the base portion 221 as depicted in FIG. 3. The tip end of the joint portion 323 is welded to the base portion 221. The joint portion 323 is indirectly joined to the charging/discharging body 100 via the negative electrode current collecting plate 220. The joint portion 323 may be directly joined to the charging/discharging body 100 after changing the shape thereof.

The boundary between the joint portion 323 and the insertion portion 322 in the height direction Z is not limited to the configuration depicted in FIG. 3. A part of the joint portion 323 may be configured to face the cylindrical portion 622 of the negative electrode side gasket 620 along the longitudinal direction X and the lateral direction Y. A part of the insertion portion 322 may be configured to face the insertion hole 221a of the base portion 221 of the negative electrode current collecting plate 220 along the longitudinal direction X and the lateral direction Y.

In the negative electrode terminal 320, the main body portion 321 has lower rigidity than the insertion portion 322 and the joint portion 323. That is, the main body portion 321 is different in material from the insertion portion 322 and the joint portion 323. The main body portion 321 is formed of a material different from the insertion portion 322 and the joint portion 323. The insertion portion 322 and the joint portion 323 contain copper or a copper alloy. For example, any alloy of 1000 series, 2000 series, 3000 series, 4000 series, 5000 series, 6000 series, and 7000 series is used for the copper alloy. In the temper of the copper alloy, for example, a material subjected to a process of any of F, O, 1/4H, 1/2H, 3/4H, H, EH, and SH may be used. The main body portion 321 contains aluminum or an aluminum alloy. Aluminum has lower hardness than copper. For example, any alloy of 1000 series, 2000 series, 3000 series, 4000 series, 5000 series, 6000 series, 7000 series, and 8000 series is used for the aluminum alloy. In the temper of the aluminum alloy, for example, a material subjected to a process of any of F, O, H, W, and T may be used.

The exterior body 400 houses the charging/discharging body 100 and the like. The exterior body 400 depicted in FIG. 1 to FIG. 4 and FIG. 7 to FIG. 10 includes a container 410, the lid 420, a cleavage valve 430, and a sealing plug 440.

The container 410 houses the charging/discharging body 100 and the like. The container 410 is configured with a metal can having a rectangular shape. The container 410 includes an opening 410a opened along the longitudinal direction and a housing portion 410b continued to the opening 410a. The container 410 is formed of, for example, aluminum or an aluminum alloy.

The lid 420 seals the opening 410a of the container 410. The container 410 is formed of a metal plate having a long plate shape. A positive electrode side insertion hole 420a configured with a circular through-hole is formed on one end side of the lid 420 in the longitudinal direction X as depicted in FIG. 7. The insertion portion 312 of the positive electrode terminal 310 and the cylindrical portion 612 of the positive electrode side gasket 610 are inserted into the positive electrode side insertion hole 420a. A negative electrode side insertion hole 420b configured with a circular through-hole is formed on the other end side of the lid 420 in the longitudinal direction X as depicted in FIG. 9. The insertion portion 322 of the negative electrode terminal 320 and the cylindrical portion 622 of the negative electrode side gasket 620 are inserted into the negative electrode side insertion hole 420b. In the lid 420, a liquid injection insertion hole 420c configured with a circular through-hole is formed between the positive electrode side insertion hole 420a and the negative electrode side insertion hole 420b. A cylindrical portion 440b of the sealing plug 440 is inserted into the liquid injection insertion hole 420c. The lid 420 is welded to the container 410. The lid 420 is formed of, for example, aluminum or an aluminum alloy.

The cleavage valve 430 is provided in the lid 420 as depicted in FIG. 8. When the internal pressure of the battery 1 reaches a predetermined value, the cleavage valve 430 cleaves toward the outside of the battery to bring the internal pressure of the battery 1 to atmospheric pressure. The cleavage valve 430 is formed in, for example, an elliptical shape. The cleavage valve 430 has a thin thickness with respect to the lid 420. The cleavage valve 430 has a groove formed as a reference for cleavage. The cleavage valve 430 is integrally formed with the lid 420. The cleavage valve 430 may be annularly welded to a through-hole provided in the lid 420 after being formed separately from the lid 420.

The sealing plug 440 seals the liquid injection insertion hole 420c of the lid 420 depicted in FIG. 8. The sealing plug 440 is formed in a columnar shape. The sealing plug 440 includes a head portion 440a having a relatively large outer diameter and a cylindrical portion 440b continued to the head portion 440a and having a relatively small outer diameter, as depicted in FIG. 8. The head portion 440a of the sealing plug 440 is welded to the lid 420. The cylindrical portion 440b is inserted into the liquid injection insertion hole 420c. The sealing plug 440 is formed of, for example, aluminum or an aluminum alloy.

The insulator 500 insulates the constitutional members of the battery 1 and the exterior body 400 from each other. The insulator 500 depicted in FIG. 2 to FIG. 4, FIG. 7, and FIG. 9 includes an insulating cover 510, a positive electrode side insulating plate 520, and a negative electrode side insulating plate 530.

The insulating cover 510 covers the charging/discharging body 100 depicted in FIG. 4. The insulating cover 510 exposes an upper part of the charging/discharging body 100 in FIG. 4 to the outside. The insulating cover 510 covers a part excluding an upper part of the charging/discharging body 100 in FIG. 4. The insulating cover 510 is formed in, for example, a pentahedral shape and is folded into a box shape. The insulating cover 510 is formed of, for example, polypropylene.

The positive electrode side insulating plate 520 insulates the positive electrode current collecting plate 210 and the lid 420 from each other as depicted in FIG. 2. The positive electrode side insulating plate 520 includes a base portion 521 having a rectangular plate shape and an edge portion 522 annularly surrounding the base portion 521 and protruding in a direction away from the lid 420 as depicted in FIG. 2 and FIG. 7. The base portion 211 of the positive electrode current collecting plate 210 is housed in a space configured with the base portion 521 and the edge portion 522 of the positive electrode side insulating plate 520. A through-hole 521a is formed in the base portion 521. The cylindrical portion 612 of the positive electrode side gasket 610 is inserted into the through-hole 521a of the base portion 521. The positive electrode side insulating plate 520 is formed of, for example, insulating resin.

The negative electrode side insulating plate 530 insulates the negative electrode current collecting plate 220 and the lid 420 from each other as depicted in FIG. 3. The negative electrode side insulating plate 530 includes a base portion 531 having a rectangular plate shape and an edge portion 532 annularly surrounding the base portion 531 and protruding in a direction away from the lid 420 as depicted in FIG. 3 and FIG. 9. The base portion 221 of the negative electrode current collecting plate 220 is housed in a space configured with the base portion 531 and the edge portion 532 of the negative electrode side insulating plate 503. A through-hole 531a is formed in the base portion 531. The cylindrical portion 622 of the negative electrode side gasket 620 is inserted into the through-hole 531a of the base portion 531. The negative electrode side insulating plate 530 is formed of, for example, insulating resin.

The sealing body 600 seals the constitutional members of the battery 1 and the exterior body 400. The constitutional member of the battery 1 is, for example, the negative electrode terminal 320. The sealing body 600 depicted in FIG. 1 to FIG. 4, FIG. 7, and FIG. 9 includes the positive electrode side gasket 610 and the negative electrode side gasket 620.

The positive electrode side gasket 610 is compressed by the positive electrode terminal 310 and the lid 420 to seal the positive electrode terminal 310 and the lid 420. The positive electrode side gasket 610 includes the base portion 611 having a rectangular plate shape and the cylindrical portion 612 having a cylindrical shape protruding to the inside of the battery 1 from a central part of the base portion 611 as depicted in FIG. 7. In addition, the positive electrode side gasket 610 includes an edge portion 613 annularly surrounding the base portion 611 and protruding to the outside of the battery 1. A through-hole is formed in the base portion 611. The main body portion 311 of the positive electrode terminal 310 is housed in a space configured with the base portion 611 and the edge portion 613 of the positive electrode side gasket 610. The cylindrical portion 612 is inserted into the positive electrode side insertion hole 420a of the lid 420 as depicted in FIG. 2. The insertion portion 312 of the positive electrode terminal 310 is inserted into the through-hole of the base portion 611 and the inner circumferential surface of the cylindrical portion 612 as depicted in FIG. 2. The positive electrode side gasket 610 is formed of, for example, insulating resin having insulating properties and elasticity.

### (Configuration of negative electrode side gasket 620 (sealing body))

The negative electrode side gasket 620 corresponds to a sealing body. The negative electrode side gasket 620 is provided in the exterior body 400. The negative electrode side gasket 620 is compressed by the negative electrode terminal 320 and the lid 420 to seal the negative electrode terminal 320 and the lid 420. The outer shape of the negative electrode side gasket 620 is similar to that of the positive electrode side gasket 610. The negative electrode side gasket 620 includes the base portion 621 having a rectangular plate shape and the cylindrical portion 622 having a cylindrical shape protruding to the inside of the battery 1 from a central part of the base portion 621 as depicted in FIG. 9. In addition, the negative electrode side gasket 620 includes an edge portion 623 annularly surrounding the base portion 621 and protruding to the outside of the battery 1. A through-hole is formed in the base portion 621. The main body portion 321 of the negative electrode terminal 320 is housed in a space configured with the base portion 621 and the edge portion 623 of the negative electrode side gasket 620. The cylindrical portion 622 is inserted into the negative electrode side insertion hole 420b of the lid 420 as depicted in FIG. 3. The insertion portion 322 of the negative electrode terminal 320 is inserted into the through-hole of the base portion 621 and the inner circumferential surface of the cylindrical portion 622 as depicted in FIG. 3. The negative electrode side gasket 620 is formed of, for example, insulating resin having insulating properties and elasticity.

### (Manufacturing method for negative electrode terminal 320)

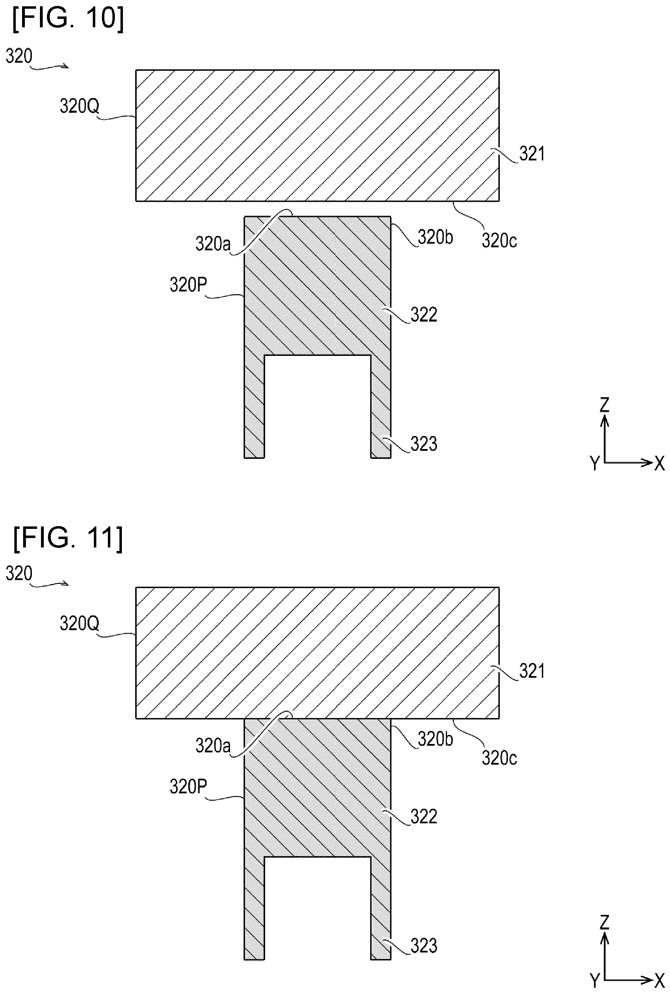

A manufacturing method for the negative electrode terminal 320 will be described with reference to FIG. 10 to FIG. 13.

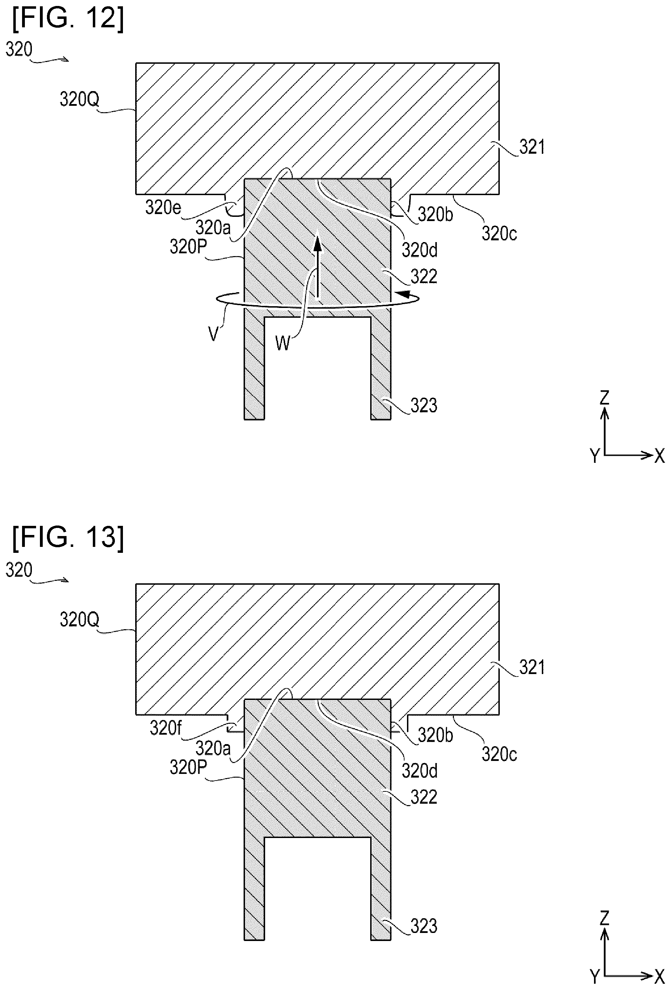

FIG. 10 is a side view for depicting, in cross section, a state in which the first portion 320P and the second portion 320Q of the negative electrode terminal 320 are separated from each other in the manufacturing method for the negative electrode terminal 320 of the battery 1 in FIG. 1. FIG. 11 is a side view for depicting, in cross section, a state in which the first portion 320P and the second portion 320Q of the negative electrode terminal 320 are brought into contact with each other, following FIG. 10. FIG. 12 is a side view for depicting, in cross section, a state in which the first portion 320P and the second portion 320Q of the negative electrode terminal 320 are subjected to friction pressure welding and the recessed portion 320d and the raised portion 320e are generated, following FIG. 11. FIG. 13 is a side view for depicting, in cross section, a state in which the raised portion 320e of the negative electrode terminal 320 is subjected to a cutting process to form the cut molded portion 320f, following FIG. 12.

As depicted in FIG. 10, in the manufacturing method for the negative electrode terminal 320, the insertion portion 322 and the joint portion 323 configuring the negative electrode terminal 320 and the main body portion 321 configuring the negative electrode terminal 320 are prepared. The insertion portion 322 is rotatably held with the height direction Z as the central axis and is movably held along the height direction Z by a holding mechanism that is not illustrated. The main body portion 321 is held with the position thereof fixed by a holding mechanism that is not illustrated.

As depicted in FIG. 11, in the manufacturing method for the negative electrode terminal 320, the insertion portion 322 is moved upward in the height direction Z and is brought into contact with the main body portion 321, following FIG. 10. The upper surface 320a of the insertion portion 322 is brought into contact with the lower surface 320c of the main body portion 321.

As depicted in FIG. 12, in the manufacturing method for the negative electrode terminal 320, the insertion portion 322 and the main body portion 321 of the negative electrode terminal 320 are subjected to friction pressure welding, following FIG. 11. The insertion portion 322 is pressed against the main body portion 321 by a pressing force W while being rotated by a rotational force V. The insertion portion 322 is pressed against the main body portion 321 while being rotated at a relatively high speed, and the temperature of the joint part between the insertion portion 322 and the main body portion 321 rises. That is, frictional heat is generated by rubbing the insertion portion 322 and the main body portion 321 at a high speed to soften the insertion portion 322 and the main body portion 321. The main body portion 321 is easily softened as compared with the insertion portion 322. At the same time, the insertion portion 322 is pressed toward the main body portion 321. The main body portion 321 is easily plastically deformed as compared with the insertion portion 322.

As depicted in FIG. 12, the upper surface 320a and a part of the outer circumferential surface 320b of the insertion portion 322 are inserted into the lower surface 320c of the main body portion 321 to form the recessed portion 320d in the main body portion 321. That is, a part of the insertion portion 322 intrudes into the main body portion 321 by friction pressure welding between the insertion portion 322 and the main body portion 321, and the recessed portion 320d is formed. The raised portion 320e is formed in the main body portion 321 so as to annularly surround the outer circumferential surface 320b of the insertion portion 322. Thereafter, the rotation of the insertion portion 322 is stopped in a relatively short time. At the same time, the insertion portion 322 is pressed relatively strongly against the main body portion 321. That is, when the rotation is stopped, the insertion portion 322 is pressed relatively strongly against the main body portion 321. The temperature of the joint part between the insertion portion 322 and the main body portion 321 drops. As a result, the joint part between the insertion portion 322 and the main body portion 321 is fixed. The shape of the raised portion 320e is a non-linear shape.

As depicted in FIG. 13, in the manufacturing method for the negative electrode terminal 320, the raised portion 320e of the negative electrode terminal 320 is partially subjected to a cutting process to form the cut molded portion 320f, following FIG. 12. An outer circumferential part of the raised portion 320e is subjected to a cutting process by, for example, an end mill to form the cut molded portion 320f. The outer circumferential part of the raised portion 320e is side parts along the longitudinal direction X and the lateral direction Y and a lower part along the height direction. The shape of the cut molded portion 320f is, for example, a rectangular shape.

The manufacturing method for the negative electrode terminal 320 is not limited to a configuration in which the insertion portion 322 is moved and brought into contact with the main body portion 321. The main body portion 321 may be moved and brought into contact with the insertion portion 322. The manufacturing method for the negative electrode terminal 320 is not limited to a configuration in which the insertion portion 322 is pressed against the main body portion 321 while being rotated and the insertion portion 322 and the joint portion 323 are subjected to friction pressure welding. The insertion portion 322 and the joint portion 323 may be subjected to friction pressure welding by pressing the main body portion 321 against the insertion portion 322 while rotating the main body portion 321 and holding the insertion portion 322. The insertion portion 322 and the joint portion 323 may be subjected to friction pressure welding by pressing the main body portion 321 against the insertion portion 322 while rotating the insertion portion 322. The insertion portion 322 and the joint portion 323 may be subjected to friction pressure welding by rotating the main body portion 321 while pressing the insertion portion 322 against the main body portion 321.

### (Effect of battery 1 and negative electrode terminal 320)

Effects of the battery 1 and the negative electrode terminal 320 will be described with reference to FIG. 3, FIG. 12, and FIG. 13.
(1) The insertion portion 322 (first portion 320P) and the main body portion 321 (second portion 320Q) are joined to each other by friction pressure welding. The main body portion 321 includes, at a joint part with the insertion portion 322, the cut molded portion 320f (projecting portion) annularly surrounding the outer circumferential surface 320b of the insertion portion 322 and projecting toward the negative electrode side gasket 620 (sealing body). The cut molded portion 320f is in contact with the negative electrode side gasket 620. The projecting portion may be the raised portion 320e.

According to the battery 1 having such a configuration, the negative electrode side gasket 620 can be held by the cut molded portion 320f of the negative electrode terminal 320 formed by friction pressure welding. That is, the movement of the negative electrode side gasket 620 can be suppressed by the cut molded portion 320f. Therefore, the battery 1 can improve or maintain sealing properties between the negative electrode terminal 320 and the lid 420. As a result, the battery 1 can use the negative electrode terminal 320 formed by the friction pressure welding between the insertion portion 322 and the main body portion 321 while improving or maintaining sealing properties between the lid 420 and the negative electrode terminal 320 by the negative electrode side gasket 620.

(9) In the negative electrode terminal 320, the insertion portion 322 (first portion 320P) contains copper or a copper alloy. The main body portion 321 (second portion 320Q) contains aluminum or an aluminum alloy.

According to the battery 1 having such a configuration, the negative electrode terminal 320 can be converted from, for example, copper to aluminum. Therefore, in a battery pack having a plurality of batteries 1, the negative electrode terminal 320 of one battery 1 and the positive electrode terminal 310 of another battery 1 can be connected to each other through a bus bar formed of aluminum. In this case, the positive electrode terminal 310 formed of aluminum or an aluminum alloy is used. That is, the negative electrode terminal 320 of one battery 1 and the positive electrode terminal 310 of another battery 1 can be connected to each other through an aluminum bus bar.

### (Negative electrode terminal 330 of modified example 1 of first embodiment)

A modified example 1 of the first embodiment corresponds to a specific example of the electrode terminal of the first battery described in the means for solving the problem.

### (Configuration of negative electrode terminal 330)

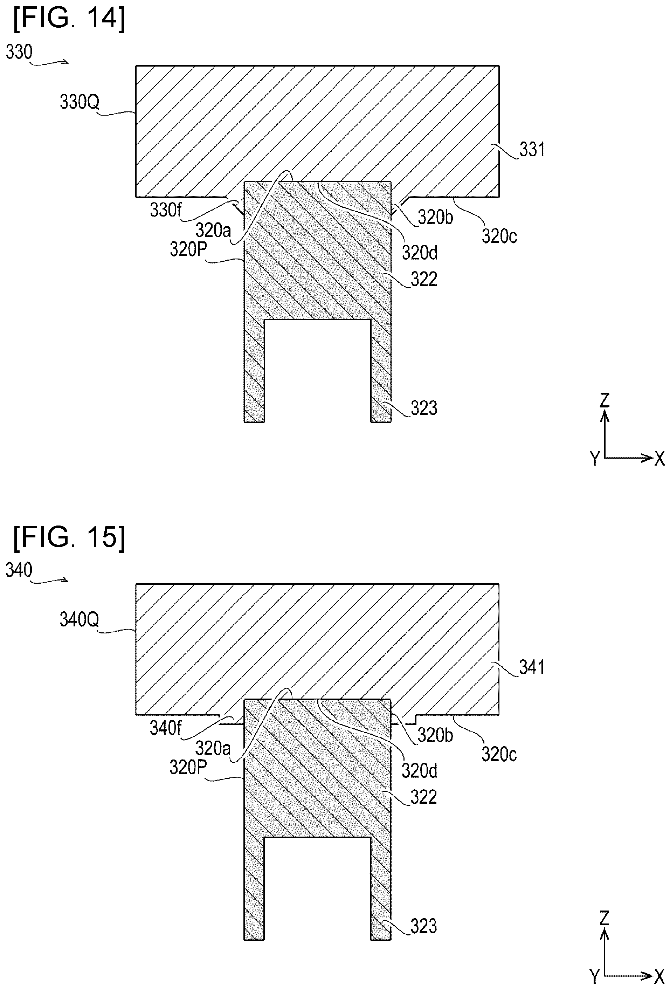

A configuration of the negative electrode terminal 330 will be described with reference to FIG. 14.

FIG. 14 is a side view for depicting, in cross section, a state in which a triangular cut molded portion 330f is formed in the negative electrode terminal 330 of the modified example 1 of the first embodiment.

A cut molded portion 330f of a main body portion 331 (second portion 330Q) is formed by cutting the raised portion 320e depicted in FIG. 12 in an inclined shape. The cut molded portion 330f is formed in a triangular shape as depicted in FIG. 14. The cut molded portion 330f is brought into contact with the outer circumferential surface 320b of the insertion portion 322. The cut molded portion 330f is inclined with respect to the lower surface 320c of the main body portion 331 and the outer circumferential surface 320b of the insertion portion 322. In the cut molded portion 330f, the inclination angle with respect to the lower surface 320c of the main body portion 331 is, for example, 45 degrees. In the cut molded portion 330f, the inclination angle with respect to the lower surface 320c of the main body portion 331 is not limited.

### (Effect of battery 1 and negative electrode terminal 330)

The effect of the battery 1 and the negative electrode terminal 330 will be described with reference to FIG. 14.

According to the battery 1 having such a configuration, the negative electrode side gasket 620 can be held or pressed from the side of the main body portion 331 and the insertion portion 322 by the cut molded portion 330f inclined with respect to the main body portion 331 and the insertion portion 322. That is, the negative electrode side gasket 620 can be held or pressed from the side of the height direction Z and the longitudinal direction X of the battery 1 or the side of the height direction Z and the lateral direction Y of the battery 1 by the cut molded portion 330f. The longitudinal direction X and the lateral direction Y correspond to directions intersecting the height direction Z. As a result, the movement of the negative electrode side gasket 620 can be suppressed or the negative electrode side gasket 620 can be partially compressed and pressurized from the directions intersecting the height direction Z and the height direction Z of the battery 1 by the cut molded portion 330f. Therefore, the battery 1 can maintain or improve sealing properties between the negative electrode terminal 330 and the lid 420.

### (Negative electrode terminal 340 of modified example 2 of first embodiment)

A modified example 2 of the first embodiment corresponds to a specific example of the electrode terminal of the first battery described in the means for solving the problem.

### (Configuration of negative electrode terminal 340)

A configuration of a negative electrode terminal 340 will be described with reference to FIG. 15.

FIG. 15 is a side view for depicting, in cross section, a state in which a relatively long rectangular cut molded portion 340f is formed along the longitudinal direction X and the lateral direction Y in the negative electrode terminal 340 of the modified example 2 of the first embodiment.

The cut molded portion 340f of a main body portion 341 (second portion 340Q) is formed by cutting the raised portion 320e depicted in FIG. 12 in a rectangular shape. The cut molded portion 340f is formed in a relatively long rectangular shape along the longitudinal direction X and the lateral direction Y as compared with the height direction Z as depicted in FIG. 15. The cut molded portion 340f is brought into contact with the outer circumferential surface 320b of the insertion portion 322. In the cut molded portion 340f, the surface area of a part facing the negative electrode side gasket 620 along directions intersecting the height direction Z is larger than that of a part facing the negative electrode side gasket 620 along the height direction Z. The directions intersecting the height direction Z correspond to the longitudinal direction X and the lateral direction Y. The cut molded portion 340f may have a trapezoidal shape inclined with respect to the lower surface 320c of the main body portion 341 or the outer circumferential surface 320b of the insertion portion 322.

### (Effect of battery 1 and negative electrode terminal 340)

The effect of the battery 1 and the negative electrode terminal 340 will be described with reference to FIG. 15.

According to the battery 1 having such a configuration, the negative electrode side gasket 620 can be held in a relatively wide range with respect to a part facing the height direction Z of the battery 1, that is, a part along the longitudinal direction X and the lateral direction Y by the cut molded portion 340f.

### (Negative electrode terminal 350 of modified example 3 of first embodiment)

A modified example 3 of the first embodiment corresponds to a specific example of the electrode terminal of the first battery described in the means for solving the problem.

### (Configuration of negative electrode terminal 350)

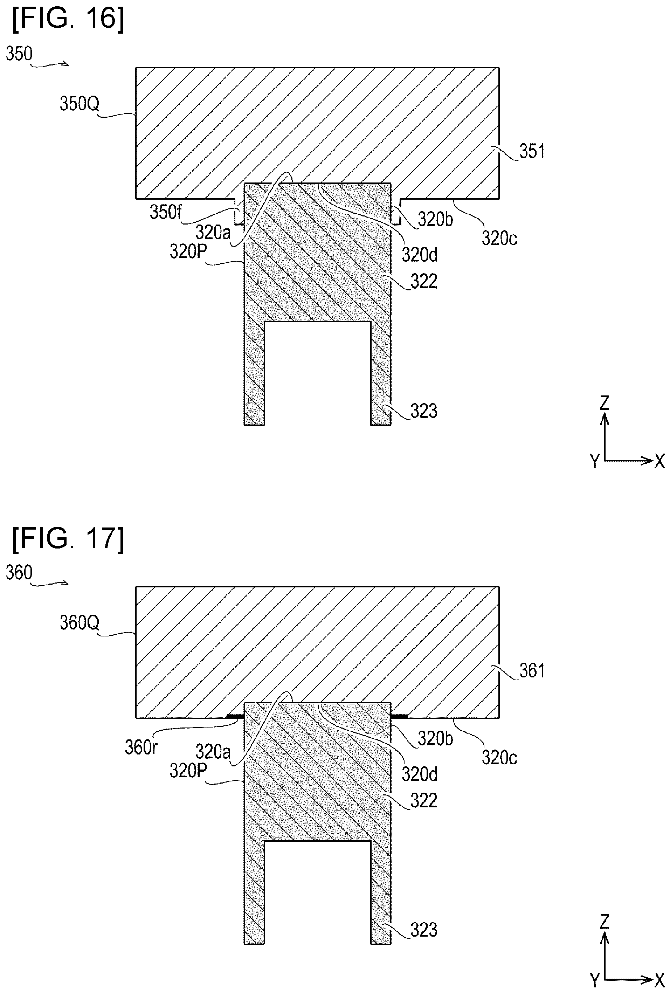

A configuration of a negative electrode terminal 350 will be described with reference to FIG. 16.

FIG. 16 is a side view for depicting, in cross section, a state in which a relatively long rectangular cut molded portion 350f is formed along the height direction Z in the negative electrode terminal 350 of the modified example 3 of the first embodiment.

The cut molded portion 350f of a main body portion 351 (second portion 350Q) is formed by cutting the raised portion 320e depicted in FIG. 12 in a rectangular shape. The cut molded portion 350f is formed in a relatively long rectangular shape along the height direction Z as compared with the longitudinal direction X and the lateral direction Y as depicted in FIG. 16. The cut molded portion 350f is brought into contact with the outer circumferential surface 320b of the insertion portion 322. In the cut molded portion 350f, the surface area of a part facing the negative electrode side gasket 620 along the height direction Z is larger than that of a part facing the negative electrode side gasket 620 along directions intersecting the height direction Z. The directions intersecting the height direction Z correspond to the longitudinal direction X and the lateral direction Y. The cut molded portion 350f may have a trapezoidal shape inclined with respect to the lower surface 320c of the main body portion 351 or the outer circumferential surface 320b of the insertion portion 322.

### (Effect of battery 1 and negative electrode terminal 350)

The effect of the battery 1 and the negative electrode terminal 350 will be described with reference to FIG. 16.

According to the battery 1 having such a configuration, the negative electrode side gasket 620 can be held in a relatively wide range with respect to a part along the height direction Z of the battery 1 by the cut molded portion 350f.

### (Negative electrode terminal 360 of modified example 4 of first embodiment)

A modified example 4 of the first embodiment corresponds to a specific example of the electrode terminal of the second battery described in the means for solving the problem.

### (Configuration of negative electrode terminal 360)

A configuration of a negative electrode terminal 360 will be described with reference to FIG. 17.

FIG. 17 is a side view for depicting, in cross section, a state in which the raised portion is removed and a plane portion 360r is formed without forming the cut molded portion in the negative electrode terminal 360 of the modified example 4 of the first embodiment.

A main body portion 361 (second portion) includes a plane portion 360r having been subjected to a cutting process at a part adjacent to a joint part with the insertion portion 322 (first portion). In the manufacturing method for the negative electrode terminal 320 depicted in FIG. 13, the plane portion 360r is formed by entirely removing the raised portion 320e of the negative electrode terminal 320 by cutting. The plane portion 360r is continued to a lower surface 360c of the main body portion 361 along the longitudinal direction X and the lateral direction Y. The plane portion 360r forms a part of the lower surface 360c. A cut mark by an end mill or the like is formed on the plane portion 360r. That is, the plane portion 360r is formed by a ring-shaped cut mark on the lower surface 360c of the main body portion 361 so as to surround the outer circumferential surface 320b of the insertion portion 322.

### (Effect of battery 1 and negative electrode terminal 360)

The effect of the battery 1 and the negative electrode terminal 360 will be described with reference to FIG. 17.

(2) The main body portion 361 (second portion) includes the plane portion 360r having been subjected to a cutting process at a part adjacent to a joint part with the insertion portion 322 (first portion).

According to the battery 1 having such a configuration, the negative electrode side gasket 620 can be held by the plane portion 360r of the negative electrode terminal 360 formed by a cutting process after friction pressure welding. That is, the movement of the negative electrode side gasket 620 can be suppressed by the plane portion 360r. Therefore, the battery 1 can maintain sealing properties between the negative electrode terminal 360 and the lid 420. As a result, the battery 1 can use the negative electrode terminal 360 formed by the friction pressure welding between the insertion portion 322 and the main body portion 361 while maintaining sealing properties between the lid 420 and the negative electrode terminal 360 by the negative electrode side gasket 620.

### (Negative electrode terminal 370 of modified example 5 of first embodiment)

A modified example 5 of the first embodiment corresponds to a specific example of the electrode terminal of the first battery described in the means for solving the problem.

### (Configuration of negative electrode terminal 370)

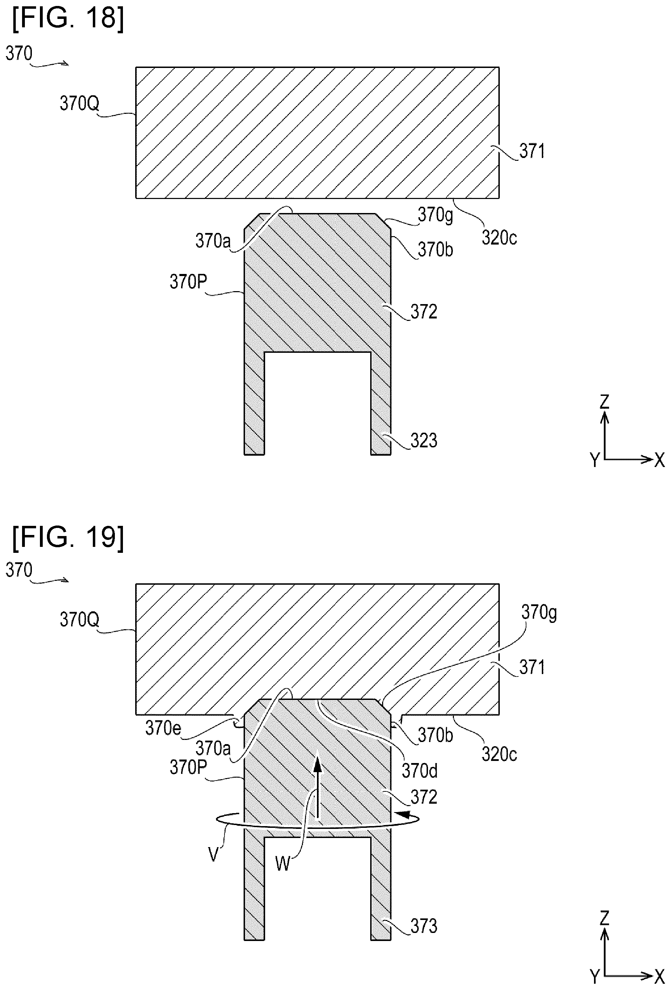

A configuration of a negative electrode terminal 370 will be described with reference to FIG. 18 and FIG. 19.

FIG. 18 is a side view for depicting, in cross section, a state of the negative electrode terminal 370 of the modified example 5 of the first embodiment before friction pressure welding. FIG. 19 is a side view for depicting, in cross section, a state of the negative electrode terminal 370 of the modified example 5 of the first embodiment after friction pressure welding.

The negative electrode terminal 370 includes a main body portion 371 (second portion 370Q), an insertion portion 372 (first portion 370P), and a joint portion 323 (first portion 370P). As depicted in FIG. 18, the insertion portion 372 includes an inclined surface 370g at a boundary part between an upper surface 370a and an outer circumferential surface 370b. The inclined surface 370g is inclined with respect to the upper surface 370a and the outer circumferential surface 370b of the insertion portion 372. The inclined surface 370g is annularly formed with respect to the insertion portion 372 with the height direction Z as the central axis.

In the negative electrode terminal 370, the insertion portion 372 and the main body portion 371 are joined to each other by friction pressure welding as depicted in FIG. 19. The upper surface 370a and the inclined surface 370g of the insertion portion 372 are inserted into the lower surface 320c of the main body portion 371 by friction pressure welding between the insertion portion 372 and the main body portion 371, and a recessed portion 370d is formed in the main body portion 371. That is, a part of the insertion portion 372 intrudes into the main body portion 371 with friction pressure welding between the insertion portion 372 and the main body portion 371, and the recessed portion 370d is formed. As depicted in FIG. 19, due to the friction pressure welding between the insertion portion 372 and the main body portion 371, a raised portion 370e (projecting portion) is formed in the main body portion 371 so as to annularly surround the outer circumferential surface 370b of the insertion portion 372. The raised portion 370e may form a cut molded portion by a cutting process as similar to the cut molded portion 320f of the negative electrode terminal 320.

### (Effect of battery 1 and negative electrode terminal 370)

The effect of the battery 1 and the negative electrode terminal 370 will be described with reference to FIG. 19.

According to the battery 1 having such a configuration, the size of the raised portion 370e can be defined by the inclined surface 370g of the insertion portion 372. That is, as the shape of the inclined surface 370g of the insertion portion 372 is made relatively larger, the size of the raised portion 370e can be made relatively smaller.

### (Battery 2 of second embodiment)

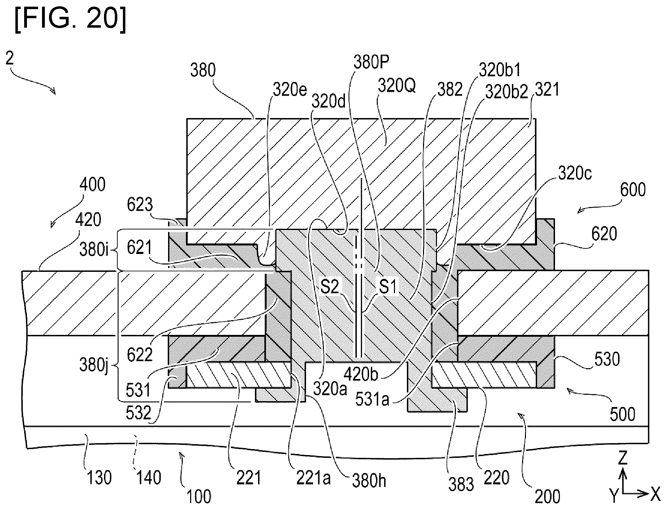

A battery 2 of a second embodiment corresponds to a specific example of the third battery described in the means for solving the problem. The battery 2 depicted in FIG. 20 has a negative electrode terminal 380.

### (Configuration of negative electrode terminal 380)

A configuration of the negative electrode terminal 380 will be described with reference to FIG. 20.

FIG. 20 is a side view for depicting, in cross section, constitutional members around the negative electrode terminal 380 of the battery 2 of the second embodiment.

The negative electrode terminal 380 includes a first portion 380P and a second portion 320Q. The first portion 380P includes an insertion portion 382 and a joint portion 383. The insertion portion 382 and the joint portion 383 are integrally formed along the height direction Z.

The insertion portion 382 includes a first shaft portion 380i and a second shaft portion 380j as depicted in FIG. 20.

The first shaft portion 380i is formed in a columnar shape along the height direction Z. The first shaft portion 380i is joined to a main body portion 321 by friction pressure welding. The first shaft portion 380i is a part where a first outer circumferential surface 380b1 exists. The shape of the first outer circumferential surface 380b1 of the first shaft portion 380i along the longitudinal direction X and the lateral direction Y is larger than that of the outer circumferential surface 320b of the insertion portion 322 of the negative electrode terminal 320. The positional relation between the first shaft portion 380i and the main body portion 321 does not match along the longitudinal direction X and the lateral direction Y. That is, the central axis S2 of the first shaft portion 380i does not match the central axis S1 of the main body portion 321. The central axis S2 is the center in a plane of the first shaft portion 380i configured with the longitudinal direction X and the lateral direction Y. The central axis S1 is the center in a plane of the main body portion 321 configured with the longitudinal direction X and the lateral direction Y. Due to friction pressure welding between the first shaft portion 380i and the main body portion 321, a raised portion 320e raised so as to annularly surround the outer circumferential surface 380b of the first shaft portion 380i is generated in the main body portion 321. The raised portion 320e may form a cut molded portion by a cutting process as similar to the cut molded portion 320f of the negative electrode terminal 320.

The second shaft portion 380j is continued to the first shaft portion 380i along the height direction Z as depicted in FIG. 20. The second shaft portion 380j is formed in a columnar shape along the height direction Z. The second shaft portion 380j is a part where a second outer circumferential surface 380b2 exists. The shape of the second shaft portion 380j along the longitudinal direction X and the lateral direction Y is smaller than that of the first shaft portion 380i. The shape of the second outer circumferential surface 380b2 of the second shaft portion 380j of the negative electrode terminal 380 along the longitudinal direction X and the lateral direction Y is the same as that of the outer circumferential surface 320b of the insertion portion 322 of the negative electrode terminal 320. The positional relation between the second shaft portion 380j and the main body portion 321 matches along the longitudinal direction X and the lateral direction Y. That is, the central axis S1 of the second shaft portion 380j matches the central axis S1 of the main body portion 321. The central axis S1 is the center in a plane of the second shaft portion 380j configured with the longitudinal direction X and the lateral direction Y, and is the center in a plane of the main body portion 321 configured with the longitudinal direction X and the lateral direction Y. The second outer circumferential surface 380b2 of the insertion portion 382 faces the base portion 621 and the cylindrical portion 622 of the negative electrode side gasket 620 along the longitudinal direction X and the lateral direction Y.

The shape of the second outer circumferential surface 380b2 of the joint portion 383 along the longitudinal direction X and the lateral direction Y is the same as that of the outer circumferential surface 320b of the joint portion 323 of the negative electrode terminal 320 as depicted in FIG. 20 and FIG. 3. The central axis S2 of an inner circumferential surface 380h of the joint portion 383 along the height direction Z does not match the central axis S2 of the second outer circumferential surface 380b2 of the joint portion 383 along the height direction Z as depicted in FIG. 20. Therefore, the joint portion 383 has the shape varied along the circumferential direction with the height direction Z as the central axis. That is, the thicknesses of the inner circumferential surface 380h and the second outer circumferential surface 380b2 of the joint portion 383 are different from each other along the circumferential direction as depicted in FIG. 20. The second outer circumferential surface 380b2 of the joint portion 383 faces the insertion hole 221a of the base portion 221 of the negative electrode current collecting plate 220 along the longitudinal direction X and the lateral direction Y.

### (Manufacturing method for negative electrode terminal 380)

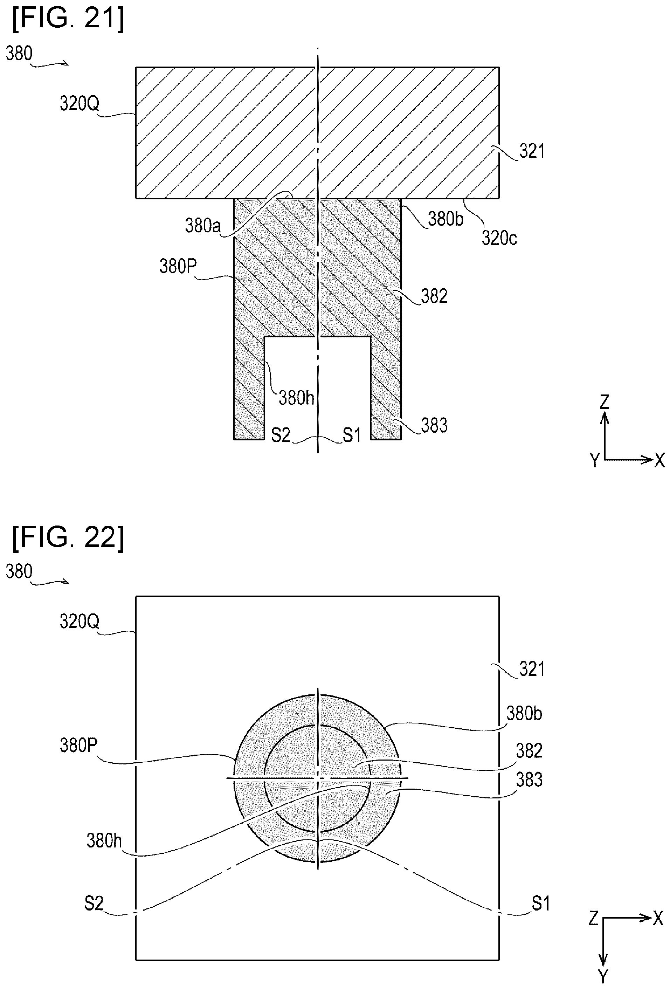

A manufacturing method for the negative electrode terminal 380 will be described with reference to FIG. 21 to FIG. 26.

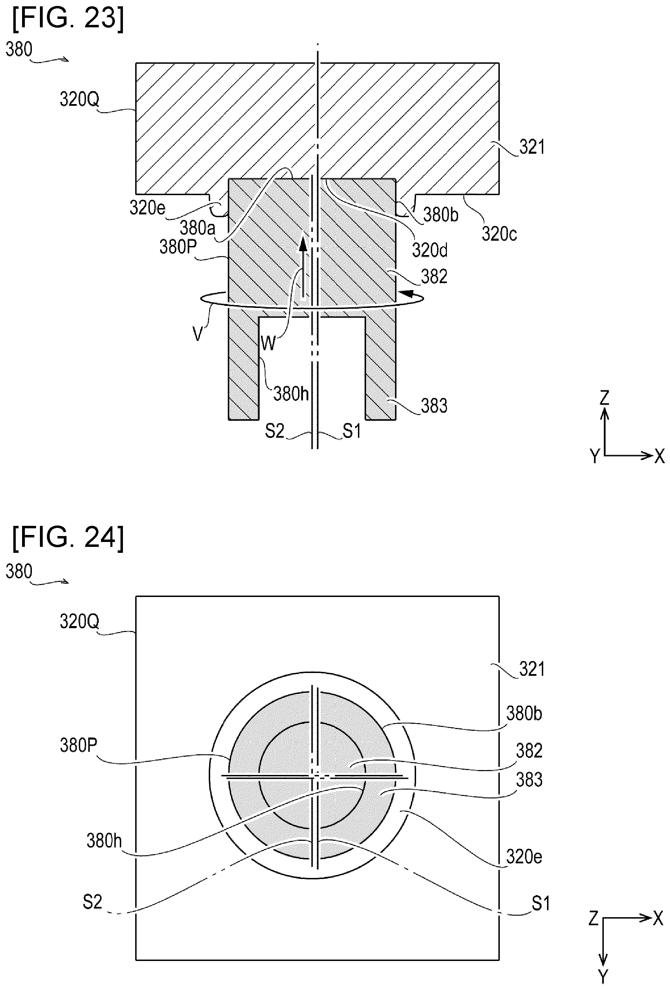

FIG. 21 is a side view for depicting, in cross section, a state in which the central axis S2 of the first portion 380P and the central axis S1 of the second portion 320Q of the negative electrode terminal 380 are allowed to relatively match each other and the first portion 380P and the second portion 320Q are brought into contact with each other in the manufacturing method for the negative electrode terminal 380 of the battery 2 of FIG. 20. FIG. 22 is a bottom view for depicting the negative electrode terminal 380 of FIG. 21 in a state without the cross-sectional view. FIG. 23 is a side view for depicting, in cross section, a state in which the first portion 380P and the second portion 320Q of the negative electrode terminal 380 are subjected to friction pressure welding, and then the central axis S2 of the first portion 380P and the central axis S1 of the second portion 320Q do not relatively match each other, following FIG. 21 and FIG. 22. FIG. 24 is a bottom view for depicting the negative electrode terminal 380 of FIG. 23 in a state without the cross-sectional view. FIG. 25 is a side view for depicting, in cross section, a state in which the outer circumferential surface 380b of the first portion 380P of the negative electrode terminal 380 is subjected to a cutting process and the central axis S2 of the first portion 380P and the central axis S1 of the second portion 320Q are allowed to relatively match each other, following FIG. 23 and FIG. 24. FIG. 26 is a bottom view for depicting the negative electrode terminal 380 of FIG. 25 in a state without the cross-sectional view.

As depicted in FIG. 21 and FIG. 22, in the manufacturing method for the negative electrode terminal 380, the insertion portion 382 is moved along the height direction Z and is brought into contact with the main body portion 321. An upper surface 380a of the insertion portion 382 is brought into contact with the lower surface 320c of the main body portion 321. The central axis S2 of the insertion portion 382 and the central axis S1 of the main body portion 321 of the negative electrode terminal 380 relatively match each other as depicted in FIG. 21 and FIG. 22.

As depicted in FIG. 23 and FIG. 24, in the manufacturing method for the negative electrode terminal 380, the insertion portion 382 and the main body portion 321 of the negative electrode terminal 320 are subjected to friction pressure welding, following FIG. 21 and FIG. 22. The insertion portion 382 is pressed against the main body portion 321 by a pressing force W while being rotated by a rotational force V. The upper surface 380a and a part of the outer circumferential surface 380b of the insertion portion 382 are inserted into the lower surface 320c of the main body portion 321 to form the recessed portion 320d in the main body portion 321. The raised portion 320e is formed in the main body portion 321 so as to annularly surround the outer circumferential surface 380b of the insertion portion 382. The central axis S2 of the insertion portion 382 and the central axis S1 of the main body portion 321 do not relatively match each other. The reason is that when the insertion portion 382 and the main body portion 321 are subjected to friction pressure welding, the insertion portion 382 is relatively displaced with respect to the main body portion 321 along the longitudinal direction X and the lateral direction Y.

As depicted in FIG. 25 and FIG. 26, in the manufacturing method for the negative electrode terminal 380, the outer circumferential surface 380b of the insertion portion 382 is cut to form the second outer circumferential surface 380b2, following FIG. 23 and FIG. 24. The second outer circumferential surface 380b2 is formed by cutting the outer circumferential surface 380b except the vicinity of the main body portion 321. The second outer circumferential surface 380b2 is shaped by cutting the outer circumferential surface 380b with the central axis S1 as a reference. In the insertion portion 382, a part where the second outer circumferential surface 380b2 is formed corresponds to the second shaft portion 380j. In the outer circumferential surface 380b of the insertion portion 382, a part in the vicinity of the main body portion 321 is referred to as the first outer circumferential surface 380b1. That is, in the outer circumferential surface 380b of the insertion portion 382, a part where the second outer circumferential surface 380b2 is not formed is referred to as the first outer circumferential surface 380b1. In the insertion portion 382, a part where the first outer circumferential surface 380b1 is formed corresponds to the first shaft portion 380i.

### (Effect of battery 2 and negative electrode terminal 380)

The effect of the battery 2 and the negative electrode terminal 380 will be described with reference to FIG. 20, FIG. 25, and FIG. 26.

(3) The insertion portion 382 (first portion 380P) includes the first shaft portion 380i joined to the main body portion 321 (second portion 320Q), and the second shaft portion 380j continued to the first shaft portion 380i and having a shape smaller in size along a direction intersecting the lamination direction with the first shaft portion 380i than that of the first shaft portion 380i.

According to the battery 2 having such a configuration, the relative positional displacement between the insertion portion 382 and the main body portion 321 of the negative electrode terminal 380 joined by friction pressure welding can be solved by cutting the outer circumferential surface 380b of the insertion portion 382 to form the second shaft portion 380j.

### (Battery 3 of modified example 1 of second embodiment)

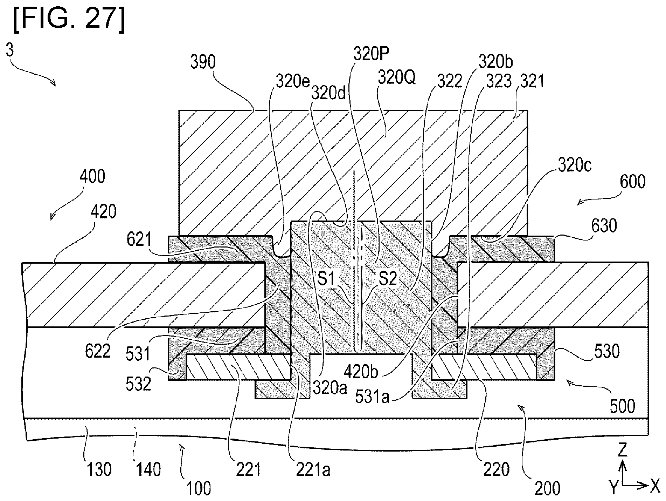

A battery 3 of a modified example 1 of the second embodiment corresponds to a specific example of the fourth battery described in the means for solving the problem. The battery 3 depicted in FIG. 27 has a negative electrode terminal 390 and a negative electrode side gasket 630.

### (Configuration of negative electrode terminal 390)

A configuration of the negative electrode terminal 390 will be described with reference to FIG. 27.

FIG. 27 is a side view for depicting, in cross section, constitutional members around the negative electrode terminal 390 of the battery 3 of the modified example 1 of the second embodiment.

The negative electrode side gasket (sealing body) 630 includes a base portion 621 and a cylindrical portion 622 as depicted in FIG. 27. The negative electrode side gasket 630 does not include the edge portion 623. The negative electrode side gasket 630 may include an edge portion annularly surrounding the base portion 621 and protruding to the outside of the battery 3. In this case, the edge portion is separated from the main body portion 321 along the longitudinal direction X and the lateral direction Y.

The negative electrode terminal 390 includes an insertion portion 322 (first portion 320P), a joint portion 323 (first portion 320P), a main body portion 321 (second portion 320Q) as depicted in FIG. 27. The central axis S2 of the insertion portion 322 and the central axis S2 of the joint portion 323 match each other. The central axis S2 of the insertion portion 322 and the central axis S1 of the main body portion 321 do not relatively match each other.

The main body portion 321 is in contact with the base portion 621 of the negative electrode side gasket 630 along the lamination direction with the insertion portion 322 at a part exposed to the outside of the lid 420. The lamination direction corresponds to the height direction Z. The main body portion 321 is not in contact with the negative electrode side gasket 630 along directions intersecting the lamination direction at a part exposed to the outside of the lid 420. The directions intersecting the lamination direction correspond to the longitudinal direction X and the lateral direction Y.

### (Manufacturing method for negative electrode terminal 390)

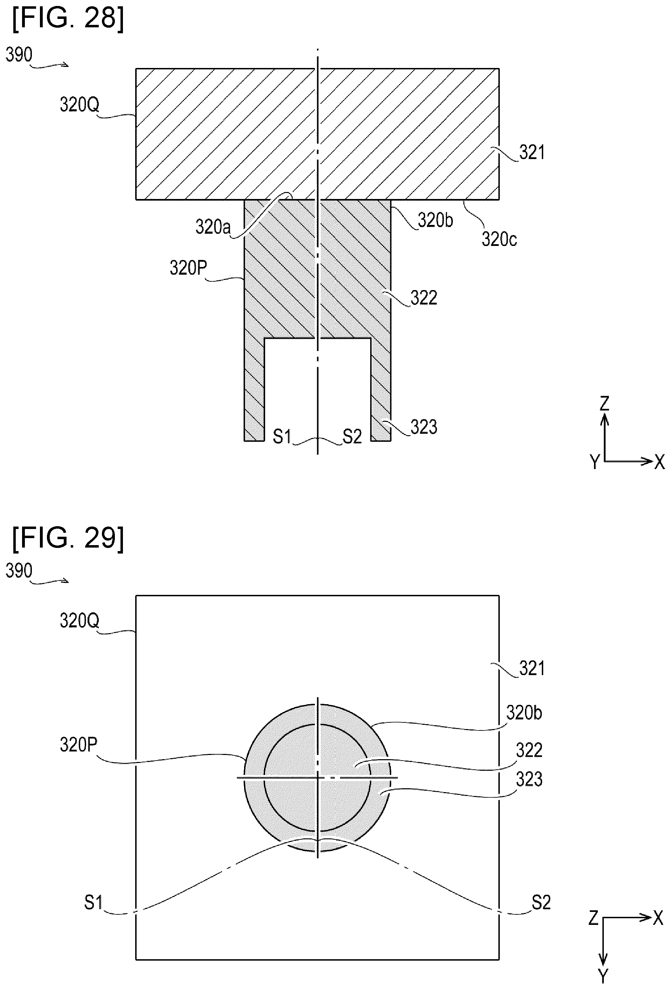

A manufacturing method for the negative electrode terminal 390 will be described with reference to FIG. 28 to FIG. 31.

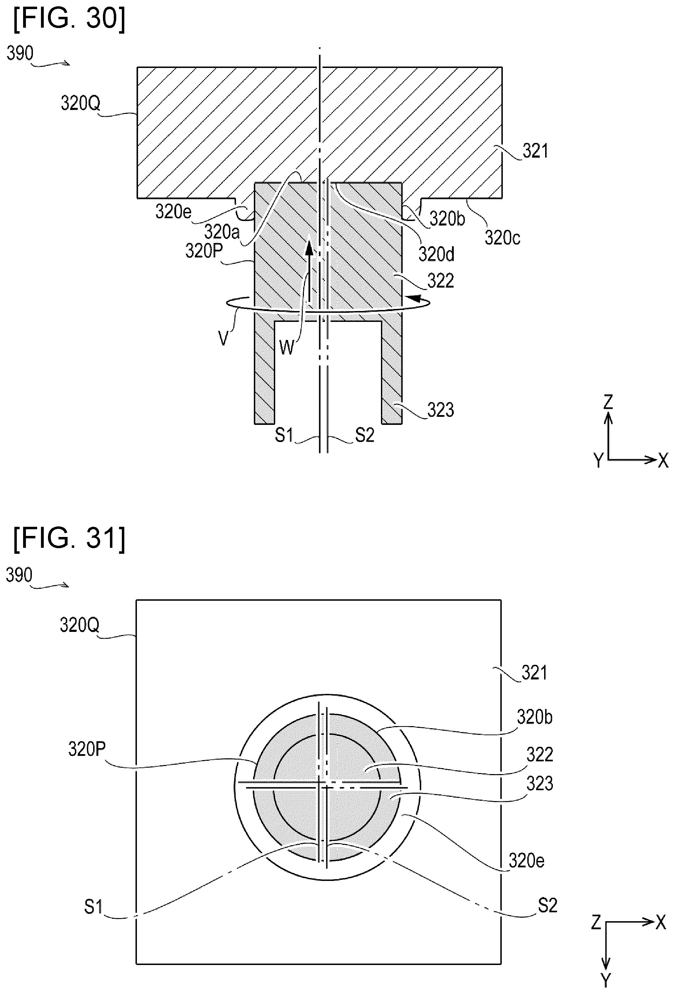

FIG. 28 is a side view for depicting, in cross section, a state in which the central axis S2 of the first portion 320P and the central axis S1 of the second portion 320Q of the negative electrode terminal 390 are allowed to relatively match each other and the first portion 320P and the second portion 320Q are brought into contact with each other in the manufacturing method for the negative electrode terminal 390 of the battery 3 of FIG. 27. FIG. 29 is a bottom view for depicting the negative electrode terminal 390 of FIG. 28 in a state without the cross-sectional view. FIG. 30 is a side view for depicting, in cross section, a state in which the first portion 320P and the second portion 320Q of the negative electrode terminal 390 are subjected to friction pressure welding, and then the central axis S2 of the first portion 320P and the central axis S1 of the second portion 320Q do not relatively match each other, following FIG. 28 and FIG. 29. FIG. 31 is a bottom view for depicting the negative electrode terminal 390 of FIG. 30 in a state without the cross-sectional view.

As depicted in FIG. 28 and FIG. 29, in the manufacturing method for the negative electrode terminal 390, the insertion portion 322 is moved along the height direction Z and is brought into contact with the main body portion 321. The upper surface 320a of the insertion portion 322 is brought into contact with the lower surface 320c of the main body portion 321. The central axis S2 of the insertion portion 322 and the central axis S1 of the main body portion 321 of the negative electrode terminal 390 relatively match each other.

As depicted in FIG. 30 and FIG. 31, in the manufacturing method for the negative electrode terminal 390, the insertion portion 322 and the main body portion 321 of the negative electrode terminal 390 are subjected to friction pressure welding, following FIG. 28 and FIG. 29. The insertion portion 322 is pressed against the main body portion 321 by a pressing force W while being rotated by a rotational force V. The upper surface 320a and a part of the outer circumferential surface 320b of the insertion portion 322 are inserted into the lower surface 320c of the main body portion 321 to form the recessed portion 320d in the main body portion 321. The raised portion 320e is formed in the main body portion 321 so as to annularly surround the outer circumferential surface 320b of the insertion portion 322. The central axis S2 of the insertion portion 322 and the central axis S1 of the main body portion 321 do not relatively match each other. The reason is that when the insertion portion 322 and the main body portion 321 are subjected to friction pressure welding, the insertion portion 322 is relatively displaced with respect to the main body portion 321 along the longitudinal direction X and the lateral direction Y.

### (Effect of battery 3 and negative electrode terminal 390)

The effect of the battery 3 and the negative electrode terminal 390 will be described with reference to FIG. 27, FIG. 30, and FIG. 31.

(4) The main body portion 321 (second portion) of the negative electrode terminal 390 is in contact with the negative electrode side gasket 630 along the lamination direction with the insertion portion 322 and is not in contact with the negative electrode side gasket 630 along directions intersecting the lamination direction at a part exposed to the outside of the negative electrode side gasket 630 (exterior body).

According to the battery 3 having such a configuration, the relative positional displacement between the insertion portion 322 and the main body portion 321 of the negative electrode terminal 380 joined by friction pressure welding can be solved by preventing the main body portion 321 from interfering the negative electrode side gasket 630 along the longitudinal direction X and the lateral direction Y.

### (Battery 4 of third embodiment)

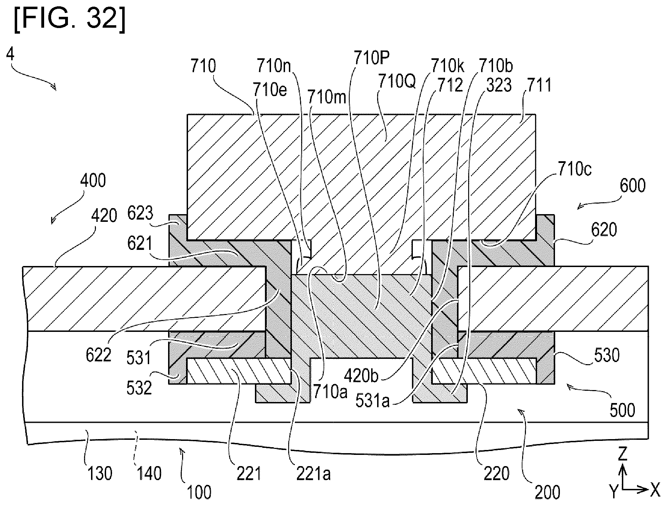

A battery 4 of a third embodiment corresponds to a specific example of the fifth battery described in the means for solving the problem. The battery 4 depicted in FIG. 32 has a negative electrode terminal 710.

### (Configuration of negative electrode terminal 710)

A configuration of the negative electrode terminal 710 will be described with reference to FIG. 32.

FIG. 32 is a side view for depicting, in cross section, constitutional members around the negative electrode terminal 710 of the battery 4 of the third embodiment.

The negative electrode terminal 710 includes a first portion 710P and a second portion 710Q as depicted in FIG. 32.

The first portion 710 includes an insertion portion 712 and a joint portion 323 as depicted in FIG. 32. The insertion portion 712 is relatively short in length along the height direction Z as compared with the insertion portion 322 of the negative electrode terminal 320.

The second portion 710Q includes a main body portion 711 as depicted in FIG. 32. The main body portion 711 includes a protruding portion 710k partially protruding toward the first portion 710P. The protruding portion 710k protrudes downward from the main body portion 711 in the height direction Z as depicted in FIG. 32.

The protruding portion 710k is joined to the insertion portion 712 by friction pressure welding. A bottom surface 710m of the protruding portion 710k is joined to an upper surface 710a of the insertion portion 712. The protruding portion 710k includes a raised portion 710e (projecting portion). The raised portion 710e is raised so as to annularly surround an outer circumferential surface 710n of the protruding portion 710k due to the friction pressure welding between the insertion portion 712 and the protruding portion 710k. The raised portion 710e projects from the outer circumferential surface 710n of the protruding portion 710k. The raised portion 710e projects toward the negative electrode side gasket 620 in directions intersecting the lamination direction of the first portion 710P and the second portion 710Q. The directions intersecting the lamination direction correspond to the longitudinal direction X and the lateral direction Y intersecting the height direction Z. The raised portion 710e is brought into contact with the upper surface 710a of the insertion portion 712.

The raised portion 710e overlaps with the insertion portion 712 along the height direction Z. The raised portion 710e does not project from the insertion portion 712 along the longitudinal direction X and the lateral direction Y. That is, the raised portion 710e does not project radially outward from the outer circumferential surface 710b of the insertion portion 712 along the longitudinal direction X and the lateral direction Y. The raised portion 710e may form a cut molded portion by a cutting process as similar to the cut molded portion 320f of the negative electrode terminal 320.

At the joint part between the upper surface 710a of the insertion portion 712 and the bottom surface 710m of the protruding portion 710k, the surface area of the upper surface 710a is larger than the surface area of the bottom surface 710m excluding the raised portion 710e. Further, the surface area of the upper surface 710a is larger than the surface area of the bottom surface 710m including the raised portion 710e.

### (Manufacturing method for negative electrode terminal 710)

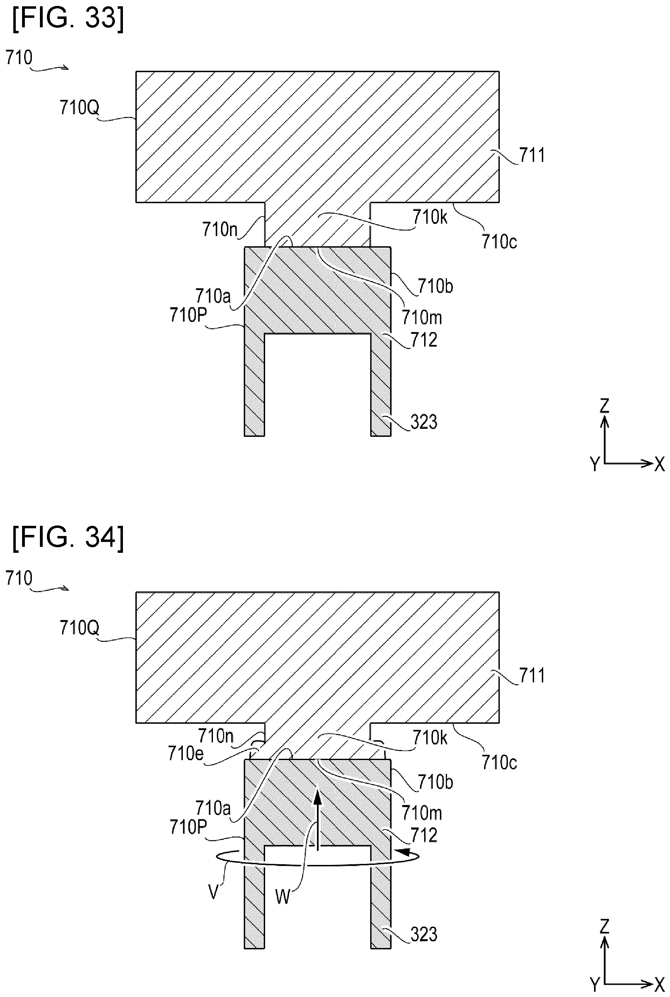

A manufacturing method for the negative electrode terminal 710 will be described with reference to FIG. 33 and FIG. 34.

FIG. 33 is a side view for depicting, in cross section, a state in which the first portion 710P and the second portion 710Q of the negative electrode terminal 710 are brought into contact with each other in the manufacturing method for the negative electrode terminal 710 of FIG. 32. FIG. 34 is a side view for depicting, in cross section, a state in which the first portion 710P and the second portion 710Q of the negative electrode terminal 710 are subjected to friction pressure welding and the raised portion 710e is generated, following FIG. 33.

As depicted in FIG. 33, in the manufacturing method for the negative electrode terminal 710, the insertion portion 712 is moved along the height direction Z and is brought into contact with the protruding portion 710k of the main body portion 711. The upper surface 710a of the insertion portion 712 is brought into contact with the bottom surface 710m of the protruding portion 710k.

As depicted in FIG. 34, in the manufacturing method for the negative electrode terminal 710, the insertion portion 712 and the protruding portion 710k of the main body portion 711 of the negative electrode terminal 710 are subjected to friction pressure welding, following FIG. 33. The insertion portion 712 is pressed against the main body portion 711 by a pressing force W while being rotated by a rotational force V. The bottom surface 710m of the protruding portion 710k is moved to the side of the main body portion 711 by the friction pressure welding between the insertion portion 712 and the main body portion 711. The raised portion 710e is formed in the protruding portion 710k so as to annularly surround the outer circumferential surface 710n of the protruding portion 710k. The raised portion 710e projects toward the negative electrode side gasket 620 in the longitudinal direction X and the lateral direction Y intersecting the height direction Z. The raised portion 710e is brought into contact with the upper surface 710a of the insertion portion 712.

### (Effect of battery 4 and negative electrode terminal 710)

The effect of the battery 4 and the negative electrode terminal 710 will be described with reference to FIG. 32 and FIG. 34.

(5) The main body portion 711 (second portion 710Q) includes the protruding portion 710k partially protruding toward the insertion portion 712 (first portion 710P). The insertion portion 712 and the protruding portion 710k are joined to each other by friction pressure welding. The protruding portion 710k includes the raised portion 710e (projecting portion) projecting toward the negative electrode side gasket 620 (sealing body) in directions intersecting the lamination direction of the insertion portion 712 and the main body portion 711. At the joint part between the insertion portion 712 and the protruding portion 710k, the surface area of the upper surface 710a of the insertion portion 712 is larger than the surface area of the bottom surface 710m of the protruding portion 710k excluding the raised portion 710e. In particular, the surface area of the upper surface 710a of the insertion portion 712 is larger than the surface area of the bottom surface 710m of the protruding portion 710k including the raised portion 710e in the embodiment.

According to the battery 4 having such a configuration, interference between the raised portion 710e of the negative electrode terminal 710 formed by friction pressure welding and the negative electrode side gasket 620 can be prevented. Therefore, the battery 4 can maintain sealing properties between the negative electrode terminal 710 and the lid 420. As a result, the battery 4 can use the negative electrode terminal 710 formed by the friction pressure welding between the insertion portion 712 and the main body portion 711 while maintaining sealing properties between the lid 420 and the negative electrode terminal 710 by the negative electrode side gasket 620.

### (Battery 5 of modified example 1 of third embodiment)

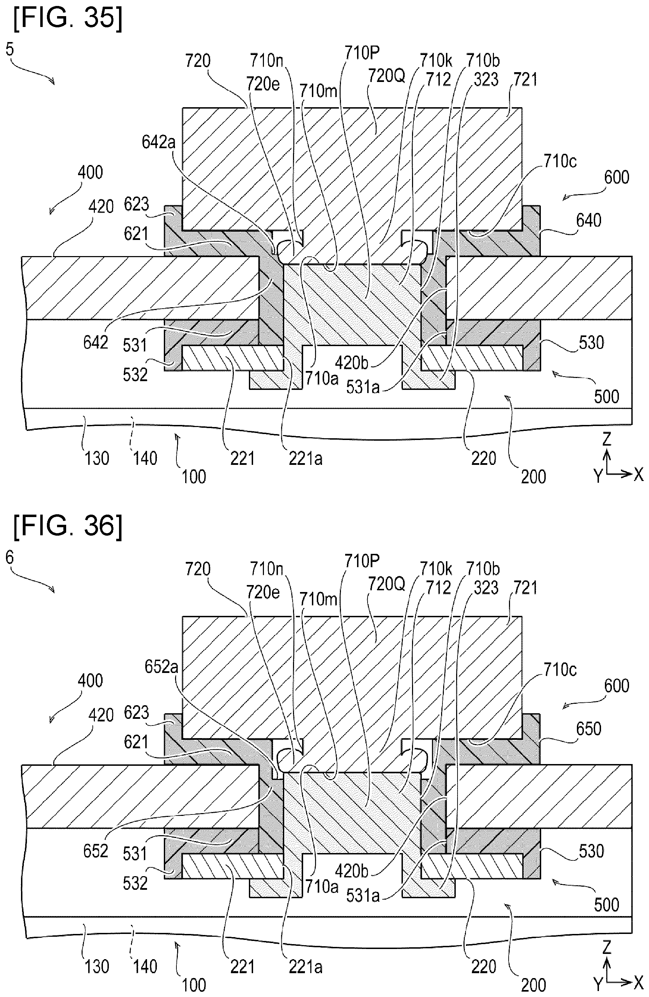

A battery 5 of a modified example 1 of the third embodiment corresponds to a specific example of the seventh battery described in the means for solving the problem. The battery 5 depicted in FIG. 35 has a negative electrode terminal 720.

### (Configuration of negative electrode terminal 720)

A configuration of the negative electrode terminal 720 will be described with reference to FIG. 35.

FIG. 35 is a side view for depicting, in cross section, constitutional members around the negative electrode terminal 720 of the battery 5 of the modified example 1 of the third embodiment.

The negative electrode terminal 720 includes a first portion 710P and a second portion 720Q as depicted in FIG. 35.

The second portion 720Q includes a main body portion 721 as depicted in FIG. 35. The main body portion 721 has a configuration similar to that of the main body portion 711 depicted in FIG. 32 except the size of a raised portion 720e. The raised portion 720e is larger in size than the raised portion 710e depicted in FIG. 32. The raised portion 720e projects in the longitudinal direction X and the lateral direction Y beyond the outer circumferential surface 710b of the insertion portion 712. That is, at the joint part between the upper surface 710a of the insertion portion 712 and the bottom surface 710m of the protruding portion 710k, the surface area of the upper surface 710a is larger than the surface area of the bottom surface 710m excluding the raised portion 720e. On the other hand, the surface area of the upper surface 710a is smaller than the surface area of the bottom surface 710m including the raised portion 720e. The raised portion 720e may form a cut molded portion by a cutting process as similar to the cut molded portion 320f of the negative electrode terminal 320.

A negative electrode side gasket 640 (sealing body) includes a base portion 621, a cylindrical portion 642, and an edge portion 623 as depicted in FIG. 35. The cylindrical portion 642 includes a concave-shaped recessed portion 642a. The recessed portion 642a is formed in a concave shape downward in the height direction Z from a part adjacent to the base portion 621. The recessed portion 642a faces the protruding portion 710k along the longitudinal direction X and the lateral direction Y. The recessed portion 642a faces the raised portion 720e along the longitudinal direction X and the lateral direction Y. The raised portion 720e is inserted into the recessed portion 642a. The tip end of the raised portion 720e is brought into contact with the bottom surface of the recessed portion 642a. The tip end of the raised portion 720e presses and deforms the bottom surface of the recessed portion 642a.

### (Effect of battery 5 and negative electrode terminal 720)

The effect of the battery 5 and the negative electrode terminal 720 will be described with reference to FIG. 35.

(7) The main body portion 721 (second portion 720Q) includes the protruding portion 710k partially protruding toward the insertion portion 712 (first portion 710P). The insertion portion 712 and the protruding portion 710k are joined to each other by friction pressure welding. The protruding portion 710k includes the raised portion 720e (projecting portion) projecting toward the negative electrode side gasket 640 (sealing body) in directions intersecting the lamination direction of the insertion portion 712 and the main body portion 721. The negative electrode side gasket 660 includes the concave-shaped recessed portion 642a at a part facing the raised portion 720e. The raised portion 720e is inserted into the recessed portion 642a.

According to the battery 5 having such a configuration, the negative electrode side gasket 640 can be held or pressed by the raised portion 720e while preventing excessive interference between the raised portion 720e of the negative electrode terminal 720 formed by friction pressure welding and the negative electrode side gasket 640 by the recessed portion 642a of the negative electrode side gasket 640. Therefore, the battery 5 can maintain sealing properties between the negative electrode terminal 720 and the lid 420. As a result, the battery 5 can use the negative electrode terminal 720 formed by the friction pressure welding between the insertion portion 712 and the main body portion 721 while maintaining sealing properties between the lid 420 and the negative electrode terminal 720 by the negative electrode side gasket 640.

### (Battery 6 of modified example 2 of third embodiment)

A battery 6 of a modified example 2 of the third embodiment corresponds to a specific example of the seventh battery described in the means for solving the problem. The battery 6 depicted in FIG. 36 has a negative electrode terminal 720 and a negative electrode side gasket 650.

### (Configuration of negative electrode terminal 720)

A configuration of the negative electrode terminal 720 will be described with reference to FIG. 36.

FIG. 36 is a side view for depicting, in cross section, constitutional members around the negative electrode terminal 720 of the battery 6 of the modified example 2 of the third embodiment.

The negative electrode side gasket 650 (sealing body) includes a base portion 621, a cylindrical portion 652, and an edge portion 623 as depicted in FIG. 36. The cylindrical portion 652 includes a concave-shaped recessed portion 652a. The recessed portion 652a is formed in a recessed shape downward in the height direction Z from a part adjacent to the base portion 621. The recessed portion 652a of the cylindrical portion 652 is longer along the height direction Z than the recessed portion 642a of the cylindrical portion 642. The recessed portion 652a faces the protruding portion 710k along the longitudinal direction X and the lateral direction Y. The recessed portion 652a faces the raised portion 720e along the longitudinal direction X and the lateral direction Y. The raised portion 720e is inserted into the recessed portion 652a. The raised portion 720e is separated from the recessed portion 652a. The tip end of the raised portion 720e is not brought into contact with the side surface and the bottom surface of the recessed portion 652a.

### (Effect of battery 6 and negative electrode terminal 720)

The effect of the battery 6 and the negative electrode terminal 720 will be described with reference to FIG. 36.

(7) The main body portion 711 (second portion 720Q) includes the protruding portion 710k partially protruding toward the insertion portion 712 (first portion 710P). The insertion portion 712 and the protruding portion 710k are joined to each other by friction pressure welding. The protruding portion 710k includes the raised portion 720e (projecting portion) projecting toward the negative electrode side gasket 650 (sealing body) in directions intersecting the joint direction of the insertion portion 712 and the main body portion 711. The raised portion 720e is in contact with the negative electrode side gasket 650 (sealing body). The negative electrode side gasket 650 includes the concave-shaped recessed portion 652a at a part facing the raised portion 720e. The raised portion 720e is inserted into the recessed portion 652a. In the embodiment, the raised portion 720e is not brought into contact with the recessed portion 652a.

According to the battery 6 having such a configuration, interference between the raised portion 720e of the negative electrode terminal 720 formed by friction pressure welding and the negative electrode side gasket 650 can be prevented. Therefore, the battery 6 can maintain sealing properties between the negative electrode terminal 720 and the lid 420. As a result, the battery 6 can use the negative electrode terminal 720 formed by the friction pressure welding between the insertion portion 712 and the main body portion 711 while maintaining sealing properties between the lid 420 and the negative electrode terminal 720 by the negative electrode side gasket 650.

### (Battery 7 of modified example 3 of third embodiment)

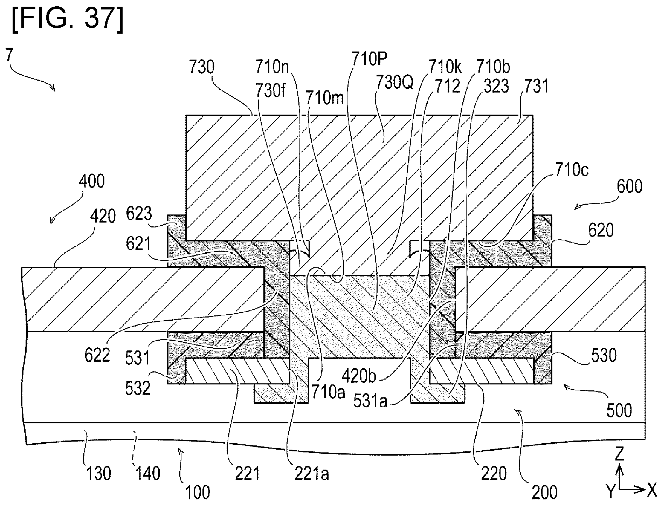

A battery 7 of a modified example 3 of the third embodiment corresponds to a specific example of the sixth battery described in the means for solving the problem. The battery 7 depicted in FIG. 37 has a negative electrode terminal 730.

### (Configuration of negative electrode terminal 730)

A configuration of the negative electrode terminal 730 will be described with reference to FIG. 37.

FIG. 37 is a side view for depicting, in cross section, constitutional members around the negative electrode terminal 730 of the battery 7 of the modified example 3 of the third embodiment.

The negative electrode terminal 730 includes a first portion 710P and a second portion 730Q as depicted in FIG. 37.

The second portion 730Q includes a cut molded portion 730f. The cut molded portion 730f is formed by partially cutting the raised portion 720e of the second portion 720Q. The cut molded portion 730f is formed by partially cutting the raised portion 720e so as to be continued to the outer circumferential surface 710b of the insertion portion 712 along the height direction Z. The cut molded portion 730f overlaps with the insertion portion 712 along the height direction Z. The cut molded portion 730f is continued to the insertion portion 712 along the height direction Z. The cut molded portion 730f does not project radially outward from the outer circumferential surface 710b of the insertion portion 712 along the longitudinal direction X and the lateral direction Y.

### (Effect of battery 7 and negative electrode terminal 730)

The effect of the battery 7 and the negative electrode terminal 730 will be described with reference to FIG. 37.

(6) The main body portion 731 (second portion 730Q) includes the protruding portion 710k partially protruding toward the insertion portion 712 (first portion 710P). The insertion portion 712 and the protruding portion 710k are joined to each other by friction pressure welding. The protruding portion 710k includes the cut molded portion 730f (projecting portion) projecting toward the negative electrode side gasket 620 (sealing body) in directions intersecting the lamination direction of the insertion portion 712 and the main body portion 731. The cut molded portion 730f (projecting portion) is in contact with the negative electrode side gasket 620.

According to the battery 7 having such a configuration, the negative electrode side gasket 620 can be held by the cut molded portion 730f of the negative electrode terminal 730 formed by a cutting process after friction pressure welding. That is, the movement of the negative electrode side gasket 620 can be suppressed by the cut molded portion 730f. Therefore, the battery 7 can maintain sealing properties between the negative electrode terminal 730 and the lid 420. As a result, the battery 7 can use the negative electrode terminal 730 formed by the friction pressure welding between the insertion portion 712 and the main body portion 731 while maintaining sealing properties between the lid 420 and the negative electrode terminal 730 by the negative electrode side gasket 620.

### (Battery 8 of fourth embodiment)

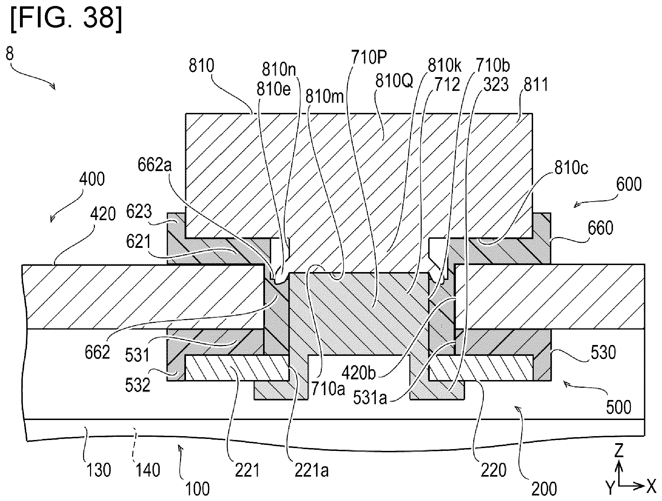

A fourth embodiment corresponds to a specific example of the seventh battery described in the means for solving the problem. A battery 8 depicted in FIG. 38 has a negative electrode terminal 810.

### (Configuration of negative electrode terminal 810 (electrode terminal))

A configuration of the negative electrode terminal 810 will be described with reference to FIG. 38.

FIG. 38 is a side view for depicting, in cross section, constitutional members around the negative electrode terminal 810 of the battery 8 of the fourth embodiment.

In the negative electrode terminal 810, an insertion portion 712 (first portion 710P) and a protruding portion 810k of a main body portion 811 (second portion 810Q) are joined to each other by friction pressure welding. The protruding portion 810k partially protrudes toward the insertion portion 712 from a lower surface 810c of the main body portion 811 as depicted in FIG. 38. The protruding portion 810k protrudes downward from the main body portion 811 in the height direction Z as depicted in FIG. 3. The surface area of an upper surface 710a of the insertion portion 712 is equal to the surface area of a bottom surface 810m of the protruding portion 810k. The upper surface 710a of the insertion portion 712 overlaps with the bottom surface 810m of the protruding portion 810k along the height direction Z. That is, the insertion portion 712 is formed in a columnar shape together with the protruding portion 810k.

A raised portion 810e (projecting portion) is formed in the main body portion 811 by friction pressure welding between the insertion portion 712 and the protruding portion 810k so as to annularly surround an outer circumferential surface 710b of the insertion portion 712 as depicted in FIG. 38. The raised portion 810e projects downward from an outer circumferential surface 710n of the protruding portion 810k in the height direction Z. The raised portion 810e may form a cut molded portion by a cutting process as similar to the cut molded portion 320f of the negative electrode terminal 320.

The negative electrode side gasket 660 (sealing body) includes a base portion 621, a cylindrical portion 662, and an edge portion 623 as depicted in FIG. 38. The cylindrical portion 662 includes a concave-shaped recessed portion 662a. The recessed portion 662a is formed in a concave shape downward in the height direction Z from a part adjacent to the base portion 621. The recessed portion 662a faces the protruding portion 810k along the longitudinal direction X and the lateral direction Y. The recessed portion 662a faces the raised portion 810e along the longitudinal direction X and the lateral direction Y. The raised portion 810e is inserted into the recessed portion 662a. The tip end of the raised portion 810e is brought into contact with the bottom surface of the recessed portion 662a. The tip end of the raised portion 810e presses and deforms the bottom surface of the recessed portion 662a.

### (Manufacturing method for negative electrode terminal 810)

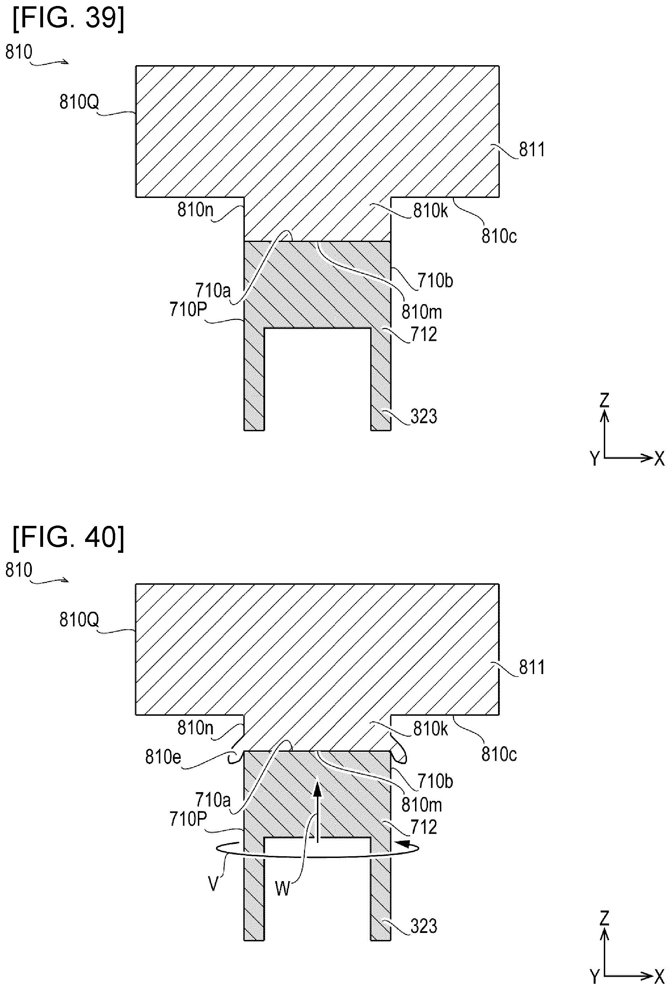

A manufacturing method for the negative electrode terminal 810 will be described with reference to FIG. 39 and FIG. 40.

FIG. 39 is a side view for depicting, in cross section, a state in which the first portion 710P and the second portion 810Q of the negative electrode terminal 810 are brought into contact with each other in the manufacturing method for the negative electrode terminal 810 of FIG. 38. FIG. 40 is a side view for depicting, in cross section, a state in which the first portion 710P and the second portion 810Q of the negative electrode terminal 810 are subjected to friction pressure welding and the raised portion 810e is generated, following FIG. 39.

As depicted in FIG. 39, in the manufacturing method for the negative electrode terminal 810, the insertion portion 712 is moved along the height direction Z and is brought into contact with the protruding portion 810k of the main body portion 811. The upper surface 710a of the insertion portion 712 is brought into contact with the bottom surface 810m of the protruding portion 810k.

As depicted in FIG. 40, in the manufacturing method for the negative electrode terminal 810, the insertion portion 712 and the protruding portion 810k of the main body portion 811 of the negative electrode terminal 810 are subjected to friction pressure welding, following FIG. 39. The insertion portion 712 is pressed against the main body portion 811 by a pressing force W while being rotated by a rotational force V. The bottom surface 810m of the protruding portion 810k is moved to the side of the main body portion 811 by the melting caused by the friction pressure welding between the insertion portion 712 and the main body portion 811. The raised portion 810e is formed in the protruding portion 810k so as to annularly surround the outer circumferential surface 710b of the insertion portion 712. The raised portion 810e projects toward the negative electrode side gasket 660 in the longitudinal direction X and the lateral direction Y intersecting the height direction Z. The raised portion 810e projects downward in the height direction Z along the outer circumferential surface 710b of the insertion portion 712.

### (Effect of battery 8 and negative electrode terminal 810)

The effect of the battery 8 and the negative electrode terminal 810 will be described with reference to FIG. 38 and FIG. 40.

(7) The insertion portion 712 (first portion 710P) and the protruding portion 810k are joined to each other by friction pressure welding. The protruding portion 810k includes the raised portion 810e (projecting portion) projecting toward the negative electrode side gasket 660 (sealing body) in directions intersecting the lamination direction of the insertion portion 712 and the main body portion 811 (second portion 810Q). The directions intersecting the lamination direction correspond to the longitudinal direction X and the lateral direction Y. The negative electrode side gasket 660 includes the concave-shaped recessed portion 662a at a part facing the raised portion 810e. The raised portion 810e is inserted into the recessed portion 662a.

According to the battery 8 having such a configuration, the negative electrode side gasket 660 can be held or pressed by the raised portion 810e while preventing excessive interference between the raised portion 810e of the negative electrode terminal 810 formed by friction pressure welding and the negative electrode side gasket 660 by the recessed portion 662a of the negative electrode side gasket 660. Therefore, the battery 8 can maintain sealing properties between the negative electrode terminal 810 and the lid 420. As a result, the battery 8 can use the negative electrode terminal 810 formed by the friction pressure welding between the insertion portion 712 and the main body portion 811 while maintaining sealing properties between the lid 420 and the negative electrode terminal 810 by the negative electrode side gasket 660.

### (Battery 9 of modified example 1 of fourth embodiment)

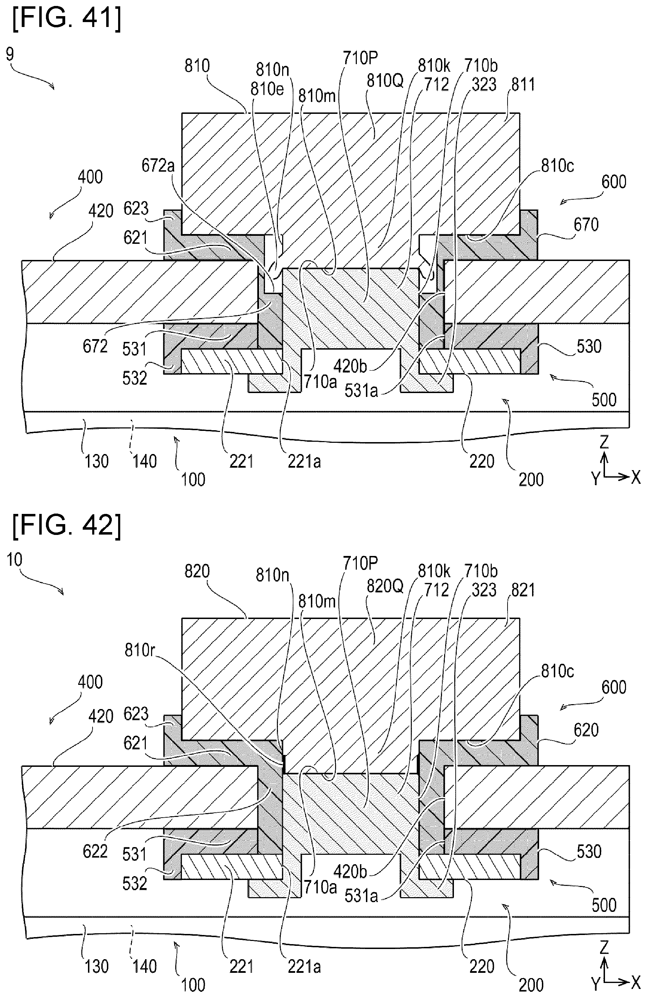

A battery 9 of a modified example 1 of the fourth embodiment corresponds to a specific example of the seventh battery described in the means for solving the problem. The battery 9 depicted in FIG. 41 has a negative electrode terminal 810 and a negative electrode side gasket 670.

### (Configuration of negative electrode terminal 810)

A configuration of the negative electrode terminal 810 will be described with reference to FIG. 41.

FIG. 41 is a side view for depicting, in cross section, constitutional members around the negative electrode terminal 810 of the battery 9 of the modified example 1 of the fourth embodiment.

The negative electrode side gasket 670 (sealing body) includes a base portion 621, a cylindrical portion 672, and an edge portion 623 as depicted in FIG. 41. The cylindrical portion 672 includes a concave-shaped recessed portion 672a. The recessed portion 672a is formed in a concave shape downward in the height direction Z from a part adjacent to the base portion 621. The recessed portion 672a of the cylindrical portion 672 is longer along the height direction Z than the recessed portion 662a of the cylindrical portion 662. The recessed portion 672a faces a protruding portion 810k along the longitudinal direction X and the lateral direction Y. The recessed portion 672a faces a raised portion 810e along the longitudinal direction X and the lateral direction Y. The raised portion 810e is inserted into the recessed portion 672a. The raised portion 810e is separated from the recessed portion 672a. The tip end of the raised portion 810e is not brought into contact with the side surface and the bottom surface of the recessed portion 672a.

### (Effect of battery 9 and negative electrode terminal 810)

The effect of the battery 9 and the negative electrode terminal 810 will be described with reference to FIG. 41.

(7) The main body portion 721 (second portion 720Q) includes the protruding portion 810k partially protruding toward the insertion portion 712 (first portion 710P). The insertion portion 712 and the protruding portion 810k are joined to each other by friction pressure welding. The protruding portion 810k includes the raised portion 810e (projecting portion) projecting toward the negative electrode side gasket 670 (sealing body) in directions intersecting the joint direction of the insertion portion 712 and the main body portion 721. The raised portion 810e is in contact with the negative electrode side gasket 670 (sealing body). The negative electrode side gasket 670 includes the concave-shaped recessed portion 672a at a part facing the raised portion 810e. The raised portion 810e is inserted into the recessed portion 672a.

According to the battery 9 having such a configuration, interference between the raised portion 810e of the negative electrode terminal 810 formed by friction pressure welding and the negative electrode side gasket 670 can be prevented. Therefore, the battery 9 can maintain sealing properties between the negative electrode terminal 810 and the lid 420. As a result, the battery 9 can use the negative electrode terminal 810 formed by the friction pressure welding between the insertion portion 712 and the main body portion 721 while maintaining sealing properties between the lid 420 and the negative electrode terminal 810 by the negative electrode side gasket 670.

### (Battery 10 of modified example 2 of fourth embodiment)

A battery 10 of a modified example 2 of the fourth embodiment corresponds to a specific example of the eighth battery described in the means for solving the problem. The battery 10 depicted in FIG. 42 has a negative electrode terminal 820.

### (Configuration of negative electrode terminal 820)

A configuration of the negative electrode terminal 820 will be described with reference to FIG. 42.

FIG. 42 is a side view for depicting, in cross section, constitutional members around the negative electrode terminal 820 of the battery 10 of the modified example 2 of the fourth embodiment.

A main body portion 821 (second portion) includes a plane portion 810r having been subjected to a cutting process at a part adjacent to a joint part with an insertion portion 712 (first portion). A protruding portion 810k includes the plane portion 810r having been subjected to a cutting process along the lamination direction of the protruding portion 810k and the insertion portion 712 at a part adjacent to the joint part with the insertion portion 712. In the manufacturing method for the negative electrode terminal 320 depicted in FIG. 13, the plane portion 810r is formed by entirely removing the raised portion 320e of the negative electrode terminal 320 by cutting. The plane portion 810r is continued to a lower surface 360c of the main body portion 821 along the longitudinal direction X and the lateral direction Y. A cut mark by an end mill or the like is formed on the plane portion 810r. That is, the plane portion 810r is configured with a ring-shaped cut mark so as to surround an outer circumferential surface 810n of the protruding portion 810k. The plane portion 810r faces the negative electrode side gasket 620 (sealing body) along the longitudinal direction X and the lateral direction Y. The plane portion 810r is brought into contact with a cylindrical portion 622.

### (Effect of battery 10 and negative electrode terminal 820)

The effect of the battery 10 and the negative electrode terminal 820 will be described with reference to FIG. 42.

(8) The insertion portion 712 (first portion) and the protruding portion 810k of the main body portion 821 (second portion) are joined to each other by friction pressure welding. The protruding portion 810k includes the plane portion 810r having been subjected to a cutting process along the lamination direction of the protruding portion 810k and the insertion portion 712 at a part adjacent to a joint part with the insertion portion 712. The joint part corresponds to a part where the bottom surface 810m of the protruding portion 810k is brought into contact with the upper surface 710a of the insertion portion 712. The lamination direction corresponds to the height direction Z. The plane portion 810r faces the negative electrode side gasket 620 (sealing body) in directions intersecting the lamination direction. The directions intersecting the lamination direction correspond to the directions along the longitudinal direction X and the lateral direction Y.

According to the battery 10 having such a configuration, the negative electrode side gasket 620 can be held by the plane portion 810r of the negative electrode terminal 820 formed by a cutting process after friction pressure welding. That is, the movement of the negative electrode side gasket 620 can be suppressed by the plane portion 810r. Therefore, the battery 10 can maintain sealing properties between the negative electrode terminal 820 and the lid 420. As a result, the battery 10 can use the negative electrode terminal 820 formed by the friction pressure welding between the insertion portion 712 and the main body portion 821 while maintaining sealing properties between the lid 420 and the negative electrode terminal 820 by the negative electrode side gasket 620.

### (Battery 11 of fifth embodiment)

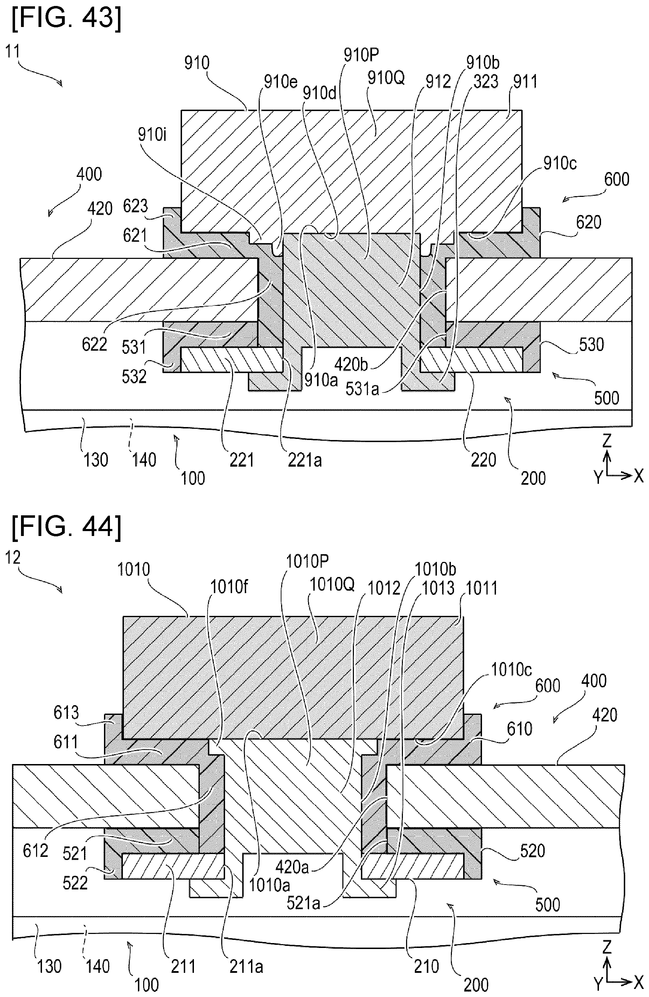

A fifth embodiment corresponds to a specific example of the first battery described in the means for solving the problem. A battery 11 depicted in FIG. 43 has a negative electrode terminal 910.

### (Configuration of negative electrode terminal 910 (electrode terminal))

A configuration of the negative electrode terminal 910 will be described with reference to FIG. 43.

FIG. 43 is a side view for depicting, in cross section, constitutional members around the negative electrode terminal 910 of the battery 11 of the fifth embodiment.

In the negative electrode terminal 910, an insertion portion 912 (first portion 910P) and a protruding portion 910k of a main body portion 911 (second portion 910Q) are joined to each other by friction pressure welding. The protruding portion 910k partially protrudes toward the insertion portion 912 from a lower surface 910c of the main body portion 911 as depicted in FIG. 43. The protruding portion 910k protrudes downward in the height direction Z from the main body portion 911 as depicted in FIG. 43. The surface area of an upper surface 910a of the insertion portion 912 is smaller than the surface area of a lower surface 910m of the protruding portion 910k.

The upper surface 910a and a part of an outer circumferential surface 910b of the insertion portion 912 are inserted into the lower surface 910m of the protruding portion 910k by friction pressure welding between the insertion portion 912 and the protruding portion 910k, and a recessed portion 910d is formed in the protruding portion 910k as depicted in FIG. 43. That is, a part of the insertion portion 912 intrudes into the protruding portion 910k by the friction pressure welding between the insertion portion 912 and the protruding portion 910k, and the recessed portion 910d is formed. As depicted in FIG. 43, due to the friction pressure welding between the insertion portion 912 and the main body portion 911, a raised portion 910e (projecting portion) is formed in the main body portion 911 so as to annularly surround the outer circumferential surface 910b of the insertion portion 912. The raised portion 910e projects downward in the height direction Z. The raised portion 910e may form a cut molded portion by a cutting process as similar to the cut molded portion 320f of the negative electrode terminal 320.

### (Effect of battery 11 and negative electrode terminal 910)

The effect of the battery 11 and the negative electrode terminal 910 will be described with reference to FIG. 43.
(1) The insertion portion 912 (first portion 910P) and the protruding portion 910k of the main body portion 911 (second portion 910Q) are joined to each other by friction pressure welding. The surface area of the upper surface 910a of the insertion portion 912 is smaller than the surface area of the lower surface 910m of the protruding portion 910k. The main body portion 911 includes, at a joint part with the insertion portion 912, the raised portion 910e (projecting portion) annularly surrounding the outer circumferential surface 910b of the insertion portion 912 and projecting toward the negative electrode side gasket 620 (sealing body). The raised portion 910e is in contact with the negative electrode side gasket 620.

According to the battery 11 having such a configuration, the negative electrode side gasket 620 can be held by a cut molded portion 910f of the negative electrode terminal 910 formed by the friction pressure welding. That is, the movement of the negative electrode side gasket 620 can be suppressed by the cut molded portion 910f. Therefore, the battery 11 can improve or maintain sealing properties between the negative electrode terminal 910 and the lid 420. As a result, the battery 11 can use the negative electrode terminal 910 formed by the friction pressure welding between the insertion portion 912 and the main body portion 911 while improving or maintaining sealing properties between the lid 420 and the negative electrode terminal 910 by the negative electrode side gasket 620.

### (Battery 12 of sixth embodiment)

A sixth embodiment corresponds to a specific example of the ninth battery described in the means for solving the problem. A battery 12 depicted in FIG. 44 has a positive electrode terminal 1010.

### (Configuration of positive electrode terminal 1010 (electrode terminal))

A configuration of the positive electrode terminal 1010 will be described with reference to FIG. 44.

FIG. 44 is a side view for depicting, in cross section, constitutional members around the positive electrode terminal 1010 of the battery 12 of the sixth embodiment.

The positive electrode terminal 1010 corresponds to an electrode terminal. The positive electrode terminal 1010 is connected to a positive electrode current collecting plate 210 as depicted in FIG. 44. The positive electrode terminal 1010 is provided in a positive electrode side gasket 610 as depicted in FIG. 44. The positive electrode terminal 1010 includes a main body portion 1011, an insertion portion 1012, and a joint portion 1013 as depicted in FIG. 44.

In the positive electrode terminal 1010, the main body portion 1011 corresponds to a second portion 1010Q. The insertion portion 1012 and the joint portion 1013 correspond to a first portion 1010P. The main body portion 1011 is formed separately from the insertion portion 1012 and the joint portion 1013. The insertion portion 1012 and the joint portion 1013 are integrally formed.

In the positive electrode terminal 1010, the first portion 1010P and the second portion 1010Q are joined to each other by friction pressure welding. That is, the insertion portion 1012 and the main body portion 1011 are joined to each other by friction pressure welding. The surface area of an upper surface 1010a of the insertion portion 1012 is smaller than the surface area of a lower surface 1010c of the main body portion 1011 at a joint part between the insertion portion 1012 and the main body portion 1011. As depicted in FIG. 44, due to the friction pressure welding between the insertion portion 1012 and the main body portion 1011, a cut molded portion 1010f (projecting portion) is formed in the insertion portion 1012 so as to annularly surround an outer circumferential surface 1010b of the insertion portion 1012. Due to the friction pressure welding between the insertion portion 1012 and the main body portion 1011, a raised portion raised so as to annularly surround the outer circumferential surface 1010b of the insertion portion 1012 is scraped out in the insertion portion 1012, and the cut molded portion 1010f is formed. The positive electrode terminal 1010 is not limited to scraping out the raised portion.

The main body portion 1011 is formed in a rectangular shape as depicted in FIG. 44. The main body portion 1011 is provided at a base portion 611 of the positive electrode side gasket 610 as depicted in FIG. 44. The main body portion 1011 is exposed to the outside of a lid 420 as depicted in FIG. 44. The outside of the lid 420 corresponds to the outside of the battery 12. The main body portion 1011 is joined to a bus bar or an electric device. The bus bar is a bus bar for electrically connecting the batteries 12 to each other. The electric device is a terminal, an end bus bar, or the like for electrically connecting the battery 12 to an external device. The external device is, for example, a device provided in an electric vehicle. The insertion portion 1012 includes the cut molded portion 1010f projecting toward the positive electrode side gasket 610 in directions intersecting the lamination direction of the insertion portion 1012 and the main body portion 1011 at a joint part with the main body portion 1011 as depicted in FIG. 44. The directions intersecting the lamination direction correspond to the longitudinal direction X and the lateral direction Y. The joint part between the main body portion 1011 and the insertion portion 1012 is a part where the lower surface 1010c of the main body portion 1011 is in contact with the upper surface 1010a of the insertion portion 1012. The cut molded portion 1010f annularly surrounds the outer circumferential surface 1010b of the insertion portion 1012 along the height direction Z. The cut molded portion 1010f is in contact with the positive electrode side gasket 610. The cut molded portion 1010f compresses a cylindrical portion 612 of the positive electrode side gasket 610 downward in the height direction Z depicted in FIG. 44.

The insertion portion 1012 is formed in a columnar shape as depicted in FIG. 44. The insertion portion 1012 is joined to the main body portion 1011 by friction pressure welding. The insertion portion 1012 extends from the main body portion 1011 downward in FIG. 44. The insertion portion 1012 is inserted into a positive electrode side insertion hole 420a of the lid 420 as depicted in FIG. 44. The insertion portion 1012 is inserted into the cylindrical portion 612 of the positive electrode side gasket 610. The insertion portion 1012 faces the base portion 611 and the cylindrical portion 612 of the positive electrode side gasket 610 along the longitudinal direction X and the lateral direction Y.

The joint portion 1013 is formed in a cylindrical shape as depicted in FIG. 44. The joint portion 1013 is continued to the insertion portion 1012. The joint portion 1013 extends from the outer circumferential portion of the insertion portion 1012 downward in FIG. 44. The joint portion 1013 is inserted into the positive electrode side insertion hole 420a of the lid 420 as depicted in FIG. 44. The joint portion 1013 faces an insertion hole 211a of the base portion 211 of the positive electrode current collecting plate 210 along the longitudinal direction X and the lateral direction Y. The tip end of the joint portion 1013 protrudes downward from the insertion hole 211a of the base portion 211 of the positive electrode current collecting plate 210 as depicted in FIG. 44. The tip end of the joint portion 1013 is pushed and widened outward in the radial direction and is caulked to the bottom surface of the base portion 211 as depicted in FIG. 44. The tip end of the joint portion 1013 is welded to the base portion 211. The joint portion 1013 is indirectly joined to a charging/discharging body 100 via the positive electrode current collecting plate 220. The joint portion 1013 may be directly joined to the charging/discharging body 100.

The boundary between the joint portion 1013 and the insertion portion 1012 in the height direction Z is not limited to the configuration depicted in FIG. 44. A part of the joint portion 1013 may be configured to face the cylindrical portion 612 of the positive electrode side gasket 610 along the longitudinal direction X and the lateral direction Y. A part of the insertion portion 1012 may be configured to face the insertion hole 211a of the base portion 211 of the positive electrode current collecting plate 210 along the longitudinal direction X and the lateral direction Y.

In the positive electrode terminal 1010, the main body portion 1011 has higher rigidity than the insertion portion 1012 and the joint portion 1013. The main body portion 1011 is formed of a material different from the insertion portion 1012 and the joint portion 1013. The insertion portion 1012 and the joint portion 1013 contain aluminum or an aluminum alloy. The main body portion 1011 contains copper or a copper alloy.

### (Effect of battery 12 and positive electrode terminal 1010)

The effect of the battery 12 and the positive electrode terminal 1010 will be described with reference to FIG. 44.

(10) The insertion portion 1012 (first portion 1010P) and the main body portion 1011 (second portion 1010Q) are joined to each other by friction pressure welding. The main body portion 1011 of the positive electrode terminal 1010 has higher rigidity than the insertion portion 1012. The insertion portion 1012 of the positive electrode terminal 1010 includes the cut molded portion 1010f (projecting portion) projecting toward the positive electrode side gasket 610 (sealing body) in directions intersecting the lamination direction of the insertion portion 1012 and the main body portion 1011 at a joint part with the main body portion 1011.

According to the battery 12 having such a configuration, the positive electrode side gasket 610 can be held by the cut molded portion 1010f of the positive electrode terminal 1010 formed by friction pressure welding. That is, the movement of the positive electrode side gasket 610 can be suppressed by the cut molded portion 1010f. Therefore, the battery 12 can maintain sealing properties between the positive electrode terminal 1010 and the lid 420. As a result, the battery 12 can use the positive electrode terminal 1010 formed by the friction pressure welding between the insertion portion 1012 and the main body portion 1011 while maintaining sealing properties between the lid 420 and the positive electrode terminal 1010 by the positive electrode side gasket 610.

(11) In the positive electrode terminal 1010, the insertion portion 1012 (first portion 1010P) contains aluminum or an aluminum alloy. The main body portion 1011 (second portion 1010Q) contains copper or a copper alloy.

According to the battery 12 having such a configuration, the positive electrode terminal 1010 can be converted from, for example, aluminum to copper. Therefore, in a battery pack having a plurality of batteries 12, the positive electrode terminal 1010 of one battery 12 and the negative electrode terminal of another battery 12 can be connected to each other through a bus bar formed of, for example, copper. In this case, the negative electrode terminal is formed of copper or a copper alloy. That is, the positive electrode terminal 1010 of one battery 12 and the negative electrode terminal of another battery 12 can be connected through a copper bus bar. In this case, the negative electrode terminal of another battery 12 having a configuration configured with copper or a copper alloy is used instead of a configuration in which copper is converted into aluminum.

According to the battery 12 having such a configuration, the end bus bar on the high voltage side of the battery pack can be formed of copper. That is, the end bus bar on the low voltage side and the end bus bar on the high voltage side of the battery pack can be configured with copper. Therefore, on the side of an electric vehicle or a hybrid vehicle mounted with a battery pack, the end bus bars on the high voltage side and the low voltage side can be made uniform by copper.

### (Battery of another embodiment)

The battery of the present invention is not limited to the configuration of the battery described in the embodiments, but can be appropriately configured on the basis of the contents described in the claims.

The embodiments have been described in detail or simply for the purpose of clearly explaining the present invention, and need not necessarily have all the configurations described, or may have configurations that are not illustrated. In addition, some of the configurations of the embodiments may be deleted, replaced with configurations of other embodiments, or combined with configurations of other embodiments.

A negative electrode terminal may be configured by optionally combining the embodiments with each other. For example, a negative electrode terminal may be configured by combining the negative electrode terminal 710 of the third embodiment and the negative electrode terminal 380 of the second embodiment with each other.

The configurations of the respective embodiments and modified examples except the first embodiment of the negative electrode terminal may be applied to the configuration of the positive electrode terminal.

The battery 1 is not limited to, for example, a power source for a hybrid electric vehicle (REV). The battery 1 may be configured as a power source for a battery electric vehicle (BEV). The battery 1 may be configured as a power source for mounting.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. The charging/discharging body of the battery of the present invention is not limited to a winding type charging/discharging body in which a positive electrode, a separator, and a negative electrode each formed in an elongated shape are bundled and wound. A lamination type in which a plurality of positive electrodes, separators, and negative electrodes each formed in a rectangular shape are alternately laminated can be applied to the charging/discharging body of the battery of the present invention. A lamination type in which a plurality of positive electrodes and a plurality of negative electrodes formed in a relatively short-length shape with respect to one separator formed in an elongated shape are alternately provided while facing each other through the separator can be applied to the charging/discharging body of the battery of the present invention. In the charging/discharging body having such a configuration, the positive electrode and the negative electrode face each other through the separator by folding and laminating the separator. The battery of the present invention is not limited to a configuration in which one charging/discharging body is provided. The battery of the present invention can be applied to a configuration in which two or more charging/discharging bodies are provided. The battery of the present invention is not limited to a configuration in which the charging/discharging body is sealed with a container and a lid. The battery of the present invention can be applied to a configuration in which the charging/discharging body is sealed with a laminate film.

### Description of Reference Characters

1, 2, 3, 4, 5, 6, 7, 8, 9, 10, 11, 12: battery
100: charging/discharging body
110: positive electrode
120: negative electrode
130: separator
140: electrolyte
200: current collector
210: positive electrode current collecting plate
211: base portion
211a: insertion hole
212: current collecting portion
220: negative electrode current collecting plate
221: base portion
221a: insertion hole
222: current collecting portion
300: electrode terminal
310: positive electrode terminal (electrode terminal)
311: main body portion (second portion)
312: insertion portion (first portion)
313: joint portion (first portion)
320: negative electrode terminal (electrode terminal)
320P: first portion
320Q: second portion
320a: upper surface
320b: outer circumferential surface
320c: lower surface
320d: recessed portion
320e: raised portion (projecting portion)
320f: cut molded portion (projecting portion)
321: main body portion (second portion)
322: insertion portion (first portion)
323: joint portion (first portion)
330: negative electrode terminal (electrode terminal)
330Q: second portion
330f: cut molded portion (projecting portion)
331: main body portion (second portion)
340: negative electrode terminal (electrode terminal)
340Q: second portion
340f: cut molded portion (projecting portion)
341: main body portion (second portion)
350: negative electrode terminal (electrode terminal)
350Q: second portion
350f: cut molded portion (projecting portion)
351: main body portion (second portion)
360: negative electrode terminal (electrode terminal)
360c: lower surface
360r: plane portion
361: main body portion (second portion)
370: negative electrode terminal (electrode terminal)
370P: first portion
370Q: second portion
370a: upper surface
370b: outer circumferential surface
370d: recessed portion
370e: raised portion (projecting portion)
370g: inclined surface
371: main body portion (second portion)
372: insertion portion (first portion)
380: negative electrode terminal (electrode terminal)
380P: first portion
380a: upper surface
380b: outer circumferential surface
380b1: first outer circumferential surface
380b2: second outer circumferential surface
380h: inner circumferential surface
380i: first shaft portion
380j: second shaft portion
382: insertion portion (first portion)
383: joint portion (first portion)
390: negative electrode terminal (electrode terminal)
400: exterior body
410: container
420: lid
420a: positive electrode side insertion hole (through-hole)
420b: negative electrode side insertion hole (through-hole)
420c: liquid injection insertion hole
430: cleavage valve
440: sealing plug
500: insulator
510: insulating cover
520: positive electrode side insulating plate
521: base portion
521a: through-hole
522: edge portion
530: negative electrode side insulating plate
531: base portion
531a: through-hole
532: edge portion
600: sealing body
610: positive electrode side gasket (sealing body)
611: base portion
612: cylindrical portion
613: edge portion
620: negative electrode side gasket (sealing body)
621: base portion
622: cylindrical portion
623: edge portion
630: negative electrode side gasket (sealing body)
640: negative electrode side gasket (sealing body)
642: cylindrical portion
642a: recessed portion
650: negative electrode side gasket (sealing body)
652: cylindrical portion
652a: recessed portion
660: negative electrode side gasket (sealing body)
662: cylindrical portion
662a: recessed portion
670: negative electrode side gasket (sealing body)
672: cylindrical portion
672a: recessed portion
710: negative electrode terminal (electrode terminal)
710P: first portion
710Q: second portion
710a: upper surface
710b: outer circumferential surface
710e: raised portion (projecting portion)
710k: protruding portion
710m: bottom surface
710n: outer circumferential surface
711: main body portion (second portion)
712: insertion portion (first portion)
720: negative electrode terminal (electrode terminal)
720Q: second portion
720b: outer circumferential surface
720e: raised portion (projecting portion)
721: main body portion (second portion)
730: negative electrode terminal (electrode terminal)
730Q: second portion
730f: cut molded portion (projecting portion)
810: negative electrode terminal (electrode terminal)
810Q: second portion
810a: upper surface
810b: outer circumferential surface
810c: lower surface
810e: raised portion (projecting portion)
810k: protruding portion
810m: bottom surface
810n: outer circumferential surface
810r: plane portion
811: main body portion (second portion)
812: insertion portion (first portion)
820: negative electrode terminal (electrode terminal)
821: main body portion (second portion)
910: negative electrode terminal (electrode terminal)
910P: first portion
910Q: second portion
910a: upper surface
910b: outer circumferential surface
910c: lower surface
910d: recessed portion
910e: raised portion (projecting portion)
910f: cut molded portion (projecting portion)
910k: protruding portion
910m: lower surface
911: main body portion (second portion)
912: insertion portion (first portion)
1010: positive electrode terminal (electrode terminal)
1010P: first portion
1010Q: second portion
1010a: upper surface
1010b: outer circumferential surface
1010c: lower surface
1010f: cut molded portion (projecting portion)
1011: main body portion (second portion)
1012: insertion portion (first portion)
1013: joint portion (first portion)
S1: central axis
S2: central axis
V: rotational force
W: pressing force
X: longitudinal direction (of battery 1)
Y: lateral direction (of battery 1)
Z: height direction (of battery 1)

## Claims

1. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that is exposed to an outside of the exterior body, is lower in rigidity than the first portion, and is joined to a bus bar or an electric device,
the first portion and the second portion being joined to each other by friction pressure welding,
the second portion including a projecting portion projecting toward the sealing body along an outer circumferential surface of the first portion at a joint part with the first portion,
the projecting portion being in contact with the sealing body.

2. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that is exposed to an outside of the exterior body, is lower in rigidity than the first portion, and is joined to a bus bar or an electric device,
the first portion and the second portion being joined to each other by friction pressure welding,
the second portion including a plane portion having been subjected to a cutting process at a part adjacent to a joint part with the first portion.

3. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that is exposed to an outside of the exterior body, is lower in rigidity than the first portion, and is joined to a bus bar or an electric device,
the first portion and the second portion being joined to each other by friction pressure welding,
the first portion including
a first shaft portion that is joined to the second portion, and
a second shaft portion that is continued to the first shaft portion and has a shape smaller in size along a direction intersecting a lamination direction with the first shaft portion than that of the first shaft portion.

4. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that is exposed to an outside of the exterior body, is lower in rigidity than the first portion, and is joined to a bus bar or an electric device,
the first portion and the second portion being joined to each other by friction pressure welding,
the second portion being in contact with the sealing body along a lamination direction with the first portion at a part exposed to the outside of the exterior body, and being not in contact with the sealing body along a direction intersecting the lamination direction.

5. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that includes a protruding portion partially protruding toward the first portion, is exposed to an outside of the exterior body, is lower in rigidity than the first portion, and is joined to a bus bar or an electric device,
the first portion and the protruding portion being joined to each other by friction pressure welding,
the protruding portion including a projecting portion projecting toward the sealing body in a direction intersecting a lamination direction of the first portion and the second portion,
a surface area of the first portion being larger than a surface area of the protruding portion excluding the projecting portion at a joint part between the first portion and the protruding portion.

6. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that includes a protruding portion partially protruding toward the first portion, is exposed to an outside of the exterior body, is lower in rigidity than the first portion, and is joined to a bus bar or an electric device,
the first portion and the protruding portion being joined to each other by friction pressure welding,
the protruding portion including a projecting portion projecting toward the sealing body in a direction intersecting a lamination direction of the first portion and the second portion,
the projecting portion being in contact with the sealing body.

7. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that includes a protruding portion partially protruding toward the first portion, is exposed to an outside of the exterior body, is lower in rigidity than the first portion, and is joined to a bus bar or an electric device,
the first portion and the protruding portion being joined to each other by friction pressure welding,
the protruding portion including a projecting portion projecting toward the sealing body in a direction intersecting a lamination direction of the first portion and the second portion,
the sealing body including a concave-shaped recessed portion at a part facing the projecting portion,
the projecting portion being inserted into the recessed portion.

8. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that includes a protruding portion partially protruding toward the first portion, is exposed to an outside of the exterior body, is lower in rigidity than the first portion, and is joined to a bus bar or an electric device,
the first portion and the protruding portion being joined to each other by friction pressure welding,
the protruding portion including a plane portion having been subjected to a cutting process along a lamination direction of the protruding portion and the first portion at a part adjacent to a joint part with the first portion,
the plane portion facing the sealing body in a direction intersecting the lamination direction.

9. The battery according to any one of claims 1 to 8, wherein
the first portion contains copper or a copper alloy,
the second portion contains aluminum or an aluminum alloy, and
the electrode terminal is a negative electrode terminal.

10. A battery comprising:
a charging/discharging body;
an exterior body that houses the charging/discharging body and has a through-hole formed therein;
a sealing body that is provided in the exterior body; and
an electrode terminal that is provided in the sealing body,
the electrode terminal including
a first portion that is inserted into the through-hole of the exterior body and is indirectly or directly joined to the charging/discharging body, and
a second portion that is exposed to an outside of the exterior body, is lower in rigidity than the first portion, and is joined to a bus bar or an electric device,
the first portion and the second portion being joined to each other by friction pressure welding,
the second portion including a projecting portion projecting toward the sealing body along an outer circumferential surface of the first portion at a joint part with the first portion,
the projecting portion being in contact with the sealing body.

11. The battery according to claim 10, wherein
the first portion contains aluminum or an aluminum alloy,
the second portion contains copper or a copper alloy, and
the electrode terminal is a positive electrode terminal.
